(19)

Europäisches
Patentamt
European
Patent Office
Office européen
des brevets

(11) **EP 3 921 968 B1**

(12) **EUROPEAN PATENT SPECIFICATION**

(45) Date of publication and mention
of the grant of the patent:
**04.10.2023 Bulletin 2023/40**

(21) Application number: **20704605.3**

(22) Date of filing: **04.02.2020**

(51) International Patent Classification (IPC):
**H04L 5/00** (2006.01)

(52) Cooperative Patent Classification (CPC):
**H04L 5/0062; H04L 27/26025; H04L 5/0007**

(86) International application number:
**PCT/IB2020/050880**

(87) International publication number:
**WO 2020/161621 (13.08.2020 Gazette 2020/33)**

(54) **LTE-M CARRIER PLACEMENT WITH GUARD BAND IN NR BAND**

LTE-M-TRÄGERPLAZIERUNG MIT SCHUTZBAND IN NR-BAND

PLACEMENT DE PORTEUSE LTE-M AVEC BANDE DE GARDE DANS UNE BANDE NR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.02.2019 US 201962800983 P**

(43) Date of publication of application:
**15.12.2021 Bulletin 2021/50**

(73) Proprietor: **TELEFONAKTIEBOLAGET LM
ERICSSON (PUBL)
164 83 Stockholm (SE)**

(72) Inventors:
• **MOZAFFARI, Mohammad**
  **San Jose, California 95134 (US)**
• **AFSHANG, Mehrnaz**
  **San Jose, California 95134 (US)**
• **BERGMAN, Johan**
  **112 27 Stockholm (SE)**
• **WANG, Yi-Pin Eric**
  **FREMONT, California 94539 (US)**

(74) Representative: **Zacco Sweden AB**
  **P.O. Box 5581**
  **Löjtnantsgatan 21**
  **114 85 Stockholm (SE)**

(56) References cited:
• **ERICSSON: "Coexistence of LTE-MTC with NR",
3GPP DRAFT; R1-1812122 COEXISTENCE OF
LTE-MTC WITH NR, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. RAN WG1, no. Spokane,
USA; 20181112 - 20181117 11 November 2018
(2018-11-11), XP051553963, Retrieved from the
Internet:
URL:http://www.3gpp.org/ftp/Meetings%5F3GP
P%5FSYNC/RAN1/Docs/R1%2D1812122%2Ezip
[retrieved on 2018-11-11]**
• **ERICSSON: "Feature lead summary for
Coexistence of LTE-MTC with NR", 3GPP DRAFT;
R1-1813723 FEATURE LEAD SUMMARY FOR
COEXISTENCE OF LTE-MTC WITH NR, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS ,
vol. RAN WG1, no. Spokane, USA; 20181112 -
20181116 14 November 2018 (2018-11-14),
XP051494313, Retrieved from the Internet:
URL:http://www.3gpp.org/ftp/tsg%5Fran/WG1%
5FRL1/TSGR1%5F95/Docs/R1%2D1813723%2Ez
ip [retrieved on 2018-11-14]**

EP 3 921 968 B1

**(Cont. next page)**

- QUALCOMM INCORPORATED: "Coexistence of LTE-MTC with NR", 3GPP DRAFT; R1-1813041_COEXISTENCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20181112 - 20181116 11 November 2018 (2018-11-11), XP051555022, Retrieved from the Internet: URL:http://www.3gpp.org/ftp/Meetings%5F3GPP%5FSYNC/RAN1/Docs/R1%2D1813041%2Ezip [retrieved on 2018-11-11]

**Description**

RELATED APPLICATIONS

This application claims the benefit of U.S. Provisional Patent Application No. 62/800,983, filed February 4, 2019.

TECHNICAL FIELD

The present disclosure generally relates to the field of wireless network communications, and more particularly, to deploying LTE-M in coexistence with New Radio (NR).

BACKGROUND

Machine-type communications (MTC) are widely used in many applications such as vehicle tracking, user and home security, banking, remote monitoring and smart grids. According to some reports, by 2023 there will be 3.5 billion wide-area devices connected to cellular networks. In this regard, Long Term Evolution - Machine Type Communication (LTE-M, LTE-MTC or eMTC) networks are being rolled out at a fast pace, and it is foreseen that in the next few years, a massive number of devices will be connected to the networks, addressing a wide spectrum of LTE-M use cases. Thanks to a design that enables 10-year battery lifetime of LTE-M devices, many of these devices will remain in service years after deployment. During the lifetime of these deployed LTE-M devices, many networks will undergo LTE to 5G New Radio (NR) migration. A smooth migration without causing service interruption to the deployed Internet-of-Things (IoT) devices is extremely important to mobile network operators (MNO). Furthermore, a migration solution that ensures superior radio resource utilization efficiency and superior coexistence performance between LTE-M and NR is highly desirable.

An Ericsson 3GPP submission entitled "Coexistence of LTE-MTC with NR" (Tdoc R1-1812122, Spokane, USA, November 2018) discusses coexistence requirements for allowing an LTE-M carrier to be embedded inside an NR carrier. Another Ericsson 3GPP submission entitled "Feature lead summary for Coexistence of LTE-MTC with NR" (Tdoc R1-1813723, Spokane, USA, November 2018) discloses proposals for the coexistence of LTE-MTC with NR. A Qualcomm Incorporated 3GPP submission entitled "Coexistence of LTE-MTC with NR" (R1-1813041, Spokane, USA, November 2018) discusses facilitating the efficient coexistence of eMTC with NR.

SUMMARY

The invention is defined by the appended independent claims. Dependent claims constitute embodiments of the invention.

Embodiments of the present invention provide for better coexistence of an LTE-M carrier inside an NR carrier. In general, if the LTE-M carrier can be placed in arbitrary places, this would satisfy its channel raster requirement. But this type of flexibility would require a guard band to be reserved within an NR carrier, around the LTE-M carrier, to prevent interference between the two systems. As a result, a significant number of NR resource blocks (RBs) might need to be reserved to accommodate the LTE-M carrier.

According to some embodiments, certain methodologies are used to determine the position where an LTE-M carrier will be placed within an NR carrier, to minimize interference between NR and LTE-M. To this end, the locations of LTE-M carrier center are identified that lead to subcarrier grid alignment between NR and LTE-M - ideally, a maximum amount of grid alignment. In addition, the possible locations of the LTE-M carrier center are identified such that a minimum number of NR resource blocks is used for accommodating the LTE-M carrier in the NR carrier. Further, the possible locations of the LTE-M carrier center are identified for which the maximum guard band can be used for LTE-M within a given number of NR RBs. Guard bands are dedicated spaces to prevent interference and are immediately adjacent to each end of the LTE-M carrier. In this case, the LTE-M guard bands fit entirely within the NR bandwidth. The maximum guard band may be the guard band amount at an LTE-M carrier center position (or positions) that is greater than the guard band amount that is available at other possible LTE-M carrier center grid-aligned positions. Transmission and reception are then carried out by network devices, while centering the LTE-M carrier in the NR bandwidth according to one of the identified possible locations for the LTE-M carrier center.

The embodiments described herein, using identified possible LTE-M carrier center locations, can be used to effectively deploy LTE-M in coexistence with NR in the case of, for example, 30 kHz NR subcarrier spacing. The approach addresses the problems of subcarrier grids alignment, interference (between NR and LTE-M) reduction, and resource utilization, which are the key issues in the coexistence of NR and LTE-M. When deploying LTE-M inside an NR carrier, this solution determines the best locations of LTE-M carrier center that leads to: 1) the maximum subcarrier grid alignment between NR and LTE-M thus minimizing the interference between these two systems, 2) the minimum reserved resources of NR RBs thus enhancing resource efficiency, and 3) the maximum potential guard band that can be considered for LTE-M within a given number of NR RBs. This, in turn, facilitates the coexistence of LTE-M with NR that in case of 30 kHz NR subcarrier spacing.

According to some embodiments, a method for communicating in a wireless communication network includes transmitting or receiving using an LTE-M carrier within the bandwidth of a NR carrier with guard bands that are immediately adjacent to each end of the LTE-M carrier and that fit entirely within the NR bandwidth. The center of the LTE-M carrier is aligned with an NR subcarrier on a 100 kHz NR raster grid, and wherein a maximum number of subcarriers in the LTE-M carrier align with subcarriers in NR. The center of the LTE-M carrier is located within the NR bandwidth such that: 1) a minimum number of NR resource blocks are occupied by any part of the LTE-M carrier and the guard bands at each end, given a predetermined bandwidth for each of the guard bands; and/or 2) given a predetermined number of NR resource blocks that can be occupied by any part of the LTE-M carrier and the guard bands at each end, a minimum guard band bandwidth from each end of the LTE-M carrier to the respective immediately adjacent NR resource block not occupied by any of part of the LTE-M carrier and the guard bands is maximized.

According to some embodiments, a network device, such as a wireless device or a radio network node, includes communication circuity and processing circuitry. The processing circuitry is configured to transmit or receive using an LTE-M carrier within the bandwidth of a NR carrier with guard bands that are immediately adjacent to each end of the LTE-M carrier and that fit entirely within the NR bandwidth. The center of the LTE-M carrier is aligned with an NR subcarrier on a 100 kHz NR raster grid, and where a maximum number of subcarriers in the LTE-M carrier align with subcarriers in NR. The center of the LTE-M carrier is located within the NR bandwidth such that: 1) a minimum number of NR resource blocks are occupied by any part of the LTE-M carrier and the guard bands at each end, given a predetermined bandwidth for each of the guard bands; and/or 2) given a predetermined number of NR resource blocks that can be occupied by any part of the LTE-M carrier and the guard bands at each end, a minimum guard band bandwidth from each end of the LTE-M carrier to the respective immediately adjacent NR resource block not occupied by any of part of the LTE-M carrier and the guard bands is maximized.

The techniques may also apply to LTE carriers more generally. According to some embodiments, a network device, such as a wireless device or a radio network node, includes communication circuity and processing circuitry. The processing circuitry is configured to transmit or receive using an LTE carrier within the bandwidth of a NR carrier with guard bands that are immediately adjacent to each end of the LTE carrier and that fit entirely within the NR bandwidth. The center of the LTE carrier is aligned with an NR subcarrier on a 100 kHz NR raster grid, and where a maximum number of subcarriers in the LTE carrier align with subcarriers in NR. The center of the LTE carrier is located within the NR bandwidth such that: 1) a minimum number of NR resource blocks are occupied by any part of the LTE carrier and the guard bands at each end, given a predetermined bandwidth for each of the guard bands; and/or 2) given a predetermined number of NR resource blocks that can be occupied by any part of the LTE carrier and the guard bands at each end, a minimum guard band bandwidth from each end of the LTE carrier to the respective immediately adjacent NR resource block not occupied by any of part of the LTE carrier and the guard bands is maximized.

Further aspects of the present invention are directed to an apparatus, network node, base station, wireless device, user equipment (UE), network devices, MTC devices, computer program products or computer readable storage medium corresponding to the methods summarized above and functional implementations of the above-summarized apparatus and UE.

Of course, the present invention is not limited to the above features and advantages. Those of ordinary skill in the art will recognize additional features and advantages upon reading the following detailed description, and upon viewing the accompanying drawings.

BRIEF DESCRIPTION OF THE FIGURES

FIG. 1 illustrates a frame structure in NR for 30 kHz subcarrier spacing.
FIG. 2 illustrates an example of NR raster location for 10 MHz channel bandwidth with 24 resource blocks (RBs) and 30 kHz subcarrier spacing, according to some embodiments.
FIG. 3 illustrates subcarrier grids for NR and LTE-M, according to some embodiments.
FIG. 4 illustrates subcarrier alignment in NR and LTE-M coexistence, according to some embodiments.
FIG. 5 illustrates a maximum subcarrier grid alignment between NR and LTE-M, according to some embodiments.
FIG. 6 illustrates maximum and minimum frequencies that need to be reserved for embedding LTE-M with guard band, according to some embodiments.
FIG. 7 illustrates the placing of LTE-M with guard band inside NR, according to some embodiments.
FIG. 8 illustrates resource block edges for an even number of NR resource blocks, according to some embodiments.
FIG. 9 illustrates resource block edges for an odd number of NR resource blocks, according to some embodiments.

FIG. 10 illustrates an LTE-M carrier with guard bands that overlaps four NR resource blocks, according to some embodiments.

FIG. 11 illustrates an LTE-M carrier with guard bands that overlaps five NR resource blocks, according to some embodiments.

FIG. 12 illustrates an LTE-M carrier inside q NR resource blocks, according to some embodiments.

FIG. 13 illustrates a flow diagram of a method that may be used by network devices, according to some embodiments.

FIG. 14 illustrates a block diagram of a network device that is a network node, according to some embodiments.

FIG. 15 illustrates is a block diagram of a network device that is a wireless device, according to some embodiments.

FIG. 16 schematically illustrates a telecommunication network connected via an intermediate network to a host computer, according to some embodiments.

FIG. 17 is a generalized block diagram of a host computer communicating via a base station with a user equipment over a partially wireless connection, according to some embodiments.

FIGS. 18, 19, 20, and 21 are flowcharts illustrating example methods implemented in a communication system including a host computer, a base station and a user equipment.

FIG. 22 is a block diagram illustrating a functional implementation of a network node, according to some embodiments.

FIG. 23 is a block diagram illustrating a functional implementation of a wireless device, according to some embodiments.

## DETAILED DESCRIPTION

Exemplary embodiments of the present disclosure will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment can be tacitly assumed to be present/used in another embodiment. Any two or more embodiments described in this document may be combined with each other. The embodiments are described with respect to LTE-M and NR but can be adapted in other radio access technologies (RATs) where the techniques or selections may be relevant. While the embodiments described herein involve LTE-M, these techniques and selected positions may also apply to LTE carriers more generally.

Embodiments described herein provide a method of network devices operating according to optimal positions of an LTE-M carrier within an 5G NR carrier (with, e.g., 30kHz subcarrier spacing) for which the interference between the two systems is minimized, while using the minimum number of NR RBs. In particular, the optimal positions of the LTE-M carrier center are identified for two key scenarios: 1) efficient placement of LTE-M inside NR given the required guard band for LTE-M (maximizing resource utilization); and 2) efficient placement of LTE-M inside NR given the number of NR RBs that can be reserved (interference mitigation by maximizing guard band).

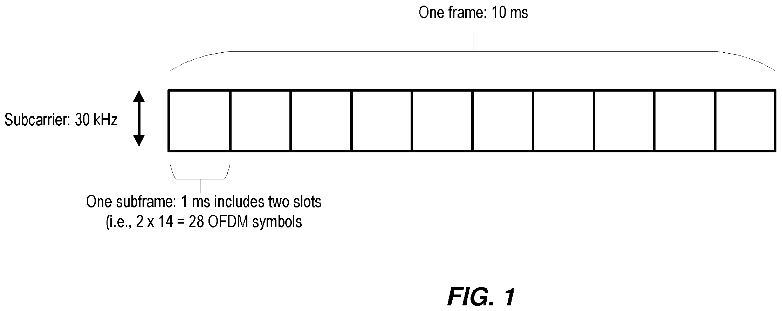

Compared to LTE numerology where only one type of subcarrier spacing (15 kHz) is considered, NR supports different types of subcarrier spacing. Consequently, slot (or mini-slot in NR) length can be different between NR and LTE-M, depending on numerology. In various embodiments, the optimal coexistence of NR and LTE-M for 30 kHz NR subcarrier spacing is considered. For the case of 30 kHz NR subcarrier spacing, orthogonal OFDM symbol duration and subframe duration are shown in FIG. 1. In NR, frame, subframe, and slot are, respectively, 10 ms units, 1 ms units, and 14 OFDM symbols. Slot duration and number of slots in each subframe depends on the subcarrier spacing.

In LTE-M, the subcarrier spacing is 15 kHz. Therefore, full orthogonality between NR and LTE-M cannot be easily maintained in the case of 30 kHz NR subcarrier spacing. Nonetheless, it is possible to significantly reduce interference by maximizing the number of aligned subcarriers between NR and LTE-M. One LTE-M resource block includes 12 subcarriers, which is equivalent to a 180 kHz bandwidth. One NR resource block with 12 subcarriers and 30 kHz subcarrier spacing occupies a 360 kHz bandwidth. In this case, placing an LTE-M RB within an NR RB can enhance the resource efficiency, thus reducing overhead in the LTE-M and NR coexistence. The NR subcarrier spacing of 30 kHz (or higher) and the embodiments described herein may be beneficial to Ultra-Reliable Low-Latency Communication (URLLC) applications.

Table 1, shown below, lists frequency bands used by both NR and LTE-M and shows, for each band, the possible channel bandwidths for 30 kHz NR subcarrier spacing.

**Table 1**

| Band | Downlink (DL) | Channel bandwidth for 30 kHz spacing [MHz] | Raster step [kHz] |
|------|---------------|--------------------------------------------|-------------------|
| 1 | 2110 - 2170 MHz | 10, 15, 20 | 100 |

(continued)

| Band | Downlink (DL) | Channel bandwidth for 30 kHz spacing [MHz] | Raster step [kHz] |
|------|---------------|--------------------------------------------|-------------------|
| 2 | 1930 - 1990 MHz | 10, 15, 20 | 100 |
| 3 | 1805 - 1880 MHz | 10, 15, 20, 25, 30 | 100 |
| 5 | 869 - 894 MHz | 10, 15, 20 | 100 |
| 7 | 2620 - 2690 MHz | 10, 15, 20 | 100 |
| 8 | 925 - 960 MHz | 10, 15, 20 | 100 |
| 12 | 729 - 746 MHz | 10, 15 | 100 |
| 20 | 791 - 821 MHz | 10, 15, 20 | 100 |
| 25 | 1930 - 1995 MHz | 10, 15, 20 | 100 |
| 28 | 758 - 803 MHz | 10, 15, 20 | 100 |
| 40 | 2300 - 2400 MHz | 10, 15, 20, 25, 30, 40, 50, 60, 80, 100 | 100 |
| 66 | 2110 - 2200 MHz | 10, 15, 20 | 100 |
| 71 | 617 - 652 MHz | 10, 15, 20 | 100 |

Table 1 shows that the possible supported NR channel bandwidths for NR and LTE-M coexistence may be: 10, 15, 20, 25, 30, 40, 50, 60, 80, and 100 MHz. Table 1 also lists the channel rasters that represent steps and frequencies that can be used by a UE to determine the radio frequency (RF) channel positions in the uplink and downlink. The channel raster of NR depends on the frequency band. An LTE-M UE searches for LTE-M carriers on a 100 kHz raster grid and, thus, a feasible center frequency for UE can be expressed as 100m, with m being an integer number. As we can see from Table 1, the channel raster step for the considered common bands for NR and LTE-M is 100 kHz.

There are several considerations to take into account. The raster defines a subset of RF reference frequencies that can be used to identify the RF channel position in the uplink and downlink. The RF reference frequency for an RF channel maps to a resource element on the carrier. Hereinafter, the channel raster is referred to as a point on the raster grid that defines the RF reference frequency. One NR RB in the frequency domain consists of 12 subcarriers. Note that an NR resource block is a one-dimensional measure spanning the frequency domain only, while an LTE PRB uses two-dimensional resource blocks of 12 subcarriers in the frequency domain and one slot in the time domain. The number of RBs is denoted by $N_{RB}$. The indexes of the middle RB for even and odd numbers of RBs are, respectively, $N_{RB}/2$ and $(N_{RB} -1)/2$.

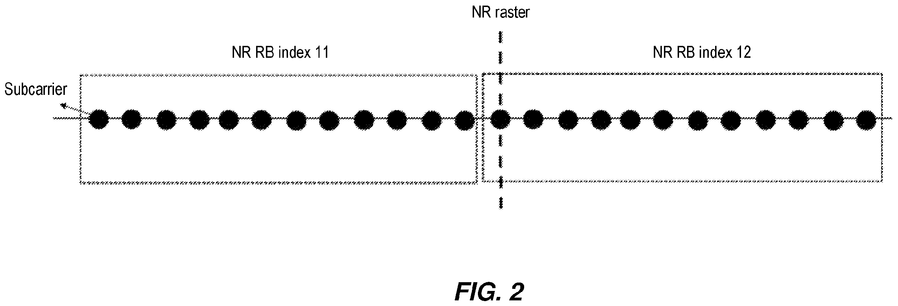

For NR carriers with an even number of RBs ($N_{RB}$), the NR channel raster is located at subcarrier index #0 in an RB with index $N_{RB}/2$. For NR carriers with an odd number of RBs, the NR channel raster is located at subcarrier index #6 in an RB with index ($N_{RB} -1)/2$. As an example, the pictorial representation of NR raster location for 10 MHz channel bandwidth with 24 RBs and 30 kHz subcarrier spacing is illustrated in FIG. 2.

Considering the fact that, in NR, the number of subcarriers is an even number, the carrier center is located between the two middle NR subcarriers. In this case, the NR carrier center frequency is related to the channel raster by:

$$F_C = F_{raster} - 15 \text{ kHz} \qquad (1)$$

where $F_C$ is the NR carrier center frequency and $F_{raster}$ is the frequency where the NR channel raster is located. Clearly, $F_C$ = - 15 kHz relative to the NR channel raster.

In LTE-M, there is a subcarrier in the center of the downlink system bandwidth called the DC subcarrier, which is an example of an even number of physical resource blocks (PRBs) within the LTE carrier. In this case, the LTE-M carrier center is placed on the DC subcarrier.

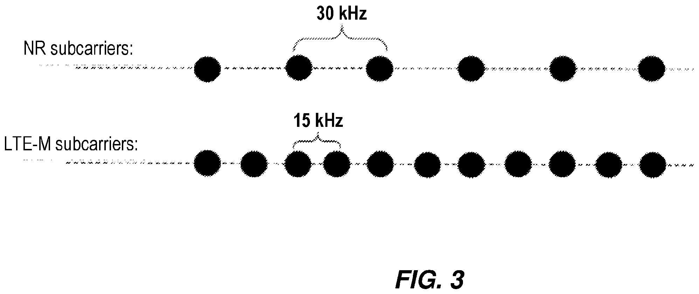

Now, one step is to find a condition under which the maximum alignment between NR and LTE-M downlink subcarrier grids is achieved. In one scenario, according to an embodiment, due to the different subcarrier spacing (i.e., 15 kHz LTE-M vs. 30 kHz NR) in NR and LTE-M systems, it is not possible to have a full subcarrier grid alignment between NR and LTE-M. Nevertheless, the optimal locations of an LTE-M carrier can be found such that the maximum subcarrier grid alignment is achieved in NR and LTE-M coexistence. As shown in FIG. 3, the maximum alignment between NR and LTE-M subcarrier grids is achieved when every two LTE-M subcarrier aligns with an NR subcarrier. That is, maximum alignment can occur when half of the LTE-M subcarriers align with the NR subcarriers.

***Subcarrier orthogonality between NR and LTE-M***

Let $F_1$ and $T_1$ be subcarrier spacing and symbol duration (excluding the cyclic prefix) of NR. Also, $F_2$ and $T_2$ are subcarrier spacing and symbol duration (excluding the cyclic prefix) of LTE-M. The relationships are expressed as:

$$F_1 = \frac{1}{T_1} = 30 \ kHz$$

$$F_2 = \frac{1}{T_2} = 15 \ kHz$$
$$F_1 = 2F_2$$
$$T_1 = T_2/2$$

Now, the orthogonality between NR and LTE-M subcarriers will be explored. Let $a_n$ be an LTE-M modulated symbol on subcarrier $n$. The interference from subcarrier $n$ of LTE-M on subcarrier $m$ of NR is:

$$I_{2,1} = \frac{1}{T_1} \int_0^{T_1} (e^{j2\pi m F_1 t})^* (a_n e^{j2\pi n F_2 t}) \, dt$$

$$I_{2,1} = \frac{a_n}{T_1} \int_0^{T_1} (e^{j2\pi \left(m - \frac{n}{2}\right) t / T_1}) \, dt$$

To ensure orthogonality and avoid intercarrier interference:

$$m - \frac{n}{2} = \text{integer}.$$

Clearly, the above condition can be satisfied when $n$ is even. Therefore, the potential interference from LTE-M on NR is not completely eliminated when both use the same resources.

Let $b_m$ be an NR modulated symbol on subcarrier $m$. The interference from subcarrier $m$ of NR on subcarrier $n$ of LTE-M is:

$$I_{1,2} = \frac{1}{T_2} \int_0^{T_2} (e^{j2\pi n F_2 t})^* (b_m e^{j2\pi m F_1 t}) \, dt$$

$$I_{1,2} = \frac{b_m}{T_2} \int_0^{T_2} (e^{j2\pi (n - 2m) t / T_2}) \, dt$$

To ensure orthogonality and avoid intercarrier interference:

$$n - 2m = \text{integer}.$$

The above condition can be always satisfied when $n$ and $m$ are integers. As a result, with the proposed subcarrier alignment scheme, the potential interference from NR on LTE-M is eliminated. Moreover, the proposed approach scientifically mitigates interference from LTE-M on NR by maximizing the number of aligned subcarriers between these two systems.

***LTE-M carrier placement considering subcarrier grid alignment***

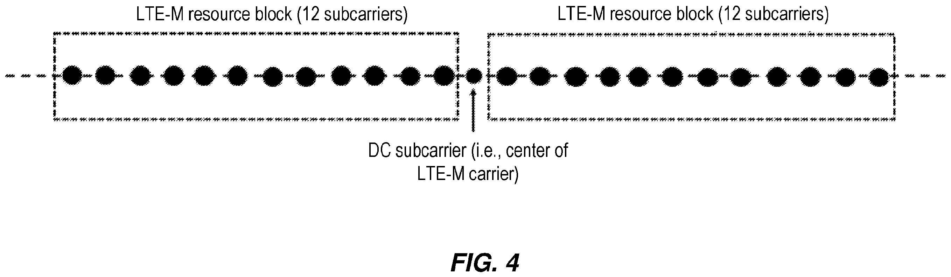

In LTE-M, there is a subcarrier in the center of the downlink system bandwidth called the DC subcarrier, as shown in FIG. 4. In this case, the LTE-M carrier center is placed on the DC subcarrier.

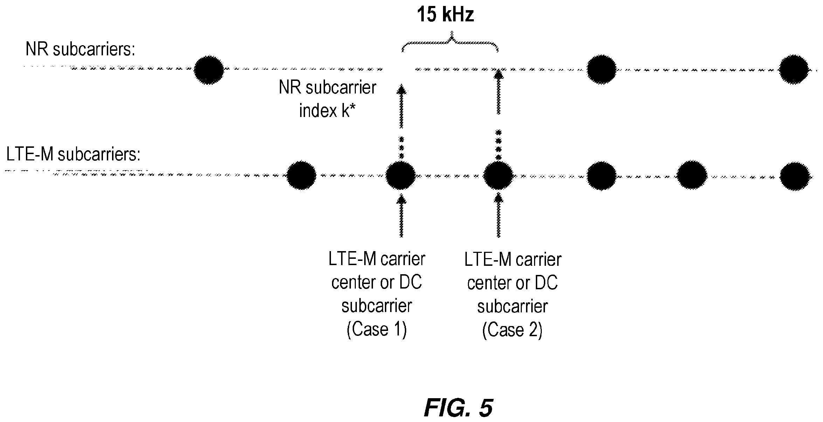

Let $k$ be an integer that represents the NR subcarrier index relative to the NR channel raster (i.e., NR carrier). The NR subcarriers are located at frequencies $100m + 30k$ kHz ($m$ is an integer). As shown in FIG. 5, an LTE-M carrier center (i.e., DC subcarrier) can be placed on two locations relative to an NR subcarrier with index k: 1) on subcarrier k of NR, and 2) 15 kHz higher than subcarrier k of NR. Therefore, an LTE-M carrier center can be placed on the following frequencies, relative to the NR raster: Case 1: 100m+30k, (kHz); Case 2: 100m+30k+15 (kHz). In addition, the location of the LTE-M carrier center must satisfy the raster offset requirement.

Considering the raster requirement, an LTE-M carrier center (which is on the DC subcarrier) can be placed at $100n$ (kHz), where $n$ is an integer. Hence, the feasible locations of an LTE-M carrier center, with respect to NR subcarrier $k$, should satisfy one of the following equations:

Case 1:
$$100n = 100m + 30k \tag{2}$$

Case 2:
$$100n = 100m + 30k + 15. \tag{3}$$

However, Case 2 is not feasible since the left side of equation (3) is even while the right side of the equation is odd. Therefore, only Case 1 is feasible for deploying LTE-M inside an NR carrier. In this case, the LTE-M carrier center is placed on an NR subcarrier.

Now, suppose k* is a solution to equation (2). Subsequently, the location of an LTE-M carrier center can be identified based on the location of the NR subcarrier with index k*. Note that k can be index of any NR subcarrier while k* is the index of a desired subcarrier, which is considered for alignment. In this case, k* is in a set of all integer numbers generated by:

$$\frac{10r}{3}, \tag{4}$$

where $r$ is an integer. For instance, for r = 3, using $\frac{10r}{3}$, the LTE-M carrier center can be placed on an NR subcarrier with index $k^* = 10$ (relative to the channel raster). It can be shown that the LTE-M carrier center can be placed on NR subcarriers with indexes {..., -20, -10, 0,10, 20, ...}, or equivalently k* = $\pm 10n$, where $n$ is integer (considering 30 kHz subcarrier spacing). The LTE-M carrier center can be placed on the following frequencies (relative to the NR channel raster):

$$F_{LTEM} = 30k^*[\text{kHz}] \tag{5}$$

Table 2 shows possible NR subcarrier indices for the LTE-M carrier center, relative to the NR raster for 30 kHz subcarrier spacing. The possible locations of LTE-M carrier center are for which maximum subcarrier grid alignment may be achieved between NR and LTE-M.

**Table 2**

| NR channel bandwidth and the number of RBs ($N_{RB}$) for 30 kHz subcarrier spacing | Possible indices of NR subcarriers $k^*$ (relative to NR raster). LTE-M center is placed on ($30k^*$ kHz) relative to the NR channel raster |
|---|---|
| 10 MHz, $N_{RB}$= 24 | -140, -130, ..., -10, 0, 10, ..., 130, 140 |
| 15 MHz, $N_{RB}$= 38 | -220, -210, ..., -10, 0, 10, ..., 210, 220 |
| 20 MHz, $N_{RB}$= 51 | -300, -290, ..., -10, 0, 10, ..., 290, 300 |
| 25 MHz, $N_{RB}$= 65 | -390, -380, ..., -10, 0, 10, ..., 370, 380 |
| 30 MHz, $N_{RB}$= 78 | -460, -450, ..., -10, 0, 10, ..., 450, 460 |
| 40 MHz, $N_{RB}$= 106 | -630, -620, ..., -10, 0, 10, ..., 620, 630 |
| 50 MHz, $N_{RB}$= 133 | -790, -780, ..., -10, 0, 10, ..., 780, 790 |

(continued)

| NR channel bandwidth and the number of RBs ($N_{RB}$) for 30 kHz subcarrier spacing | Possible indices of NR subcarriers $k^*$ (relative to NR raster). LTE-M center is placed on ($30k^*$ kHz) relative to the NR channel raster |
|---|---|
| 60 MHz, $N_{RB}$= 162 | -970, -960, ..., -10, 0, 10, ..., 960, 970 |
| 80 MHz, $N_{RB}$= 217 | -1300, -1290, ..., -10, 0, 10, ..., 1290, 1300 |
| 100 MHz, $N_{RB}$= 273 | -1630, -1620, ..., -10, 0, 10, ..., 1620, 1630 |

The proposed approach ensures the maximum subcarrier grids alignment for NR and LTE-M. While this approach significantly mitigates potential interference between NR and LTE-M, some level of interference from LTE-M on NR may be observed when both use the same resources.

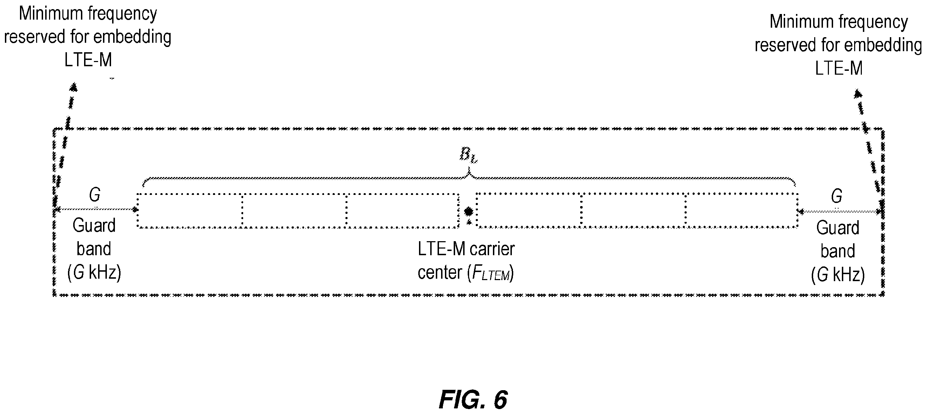

In order to further reduce any potential interference between LTE-M and NR systems, a guard band can be considered around the LTE-M carrier. Parameter G may be used to indicate the amount guard band used in each side of the LTE-M carrier when it is placed inside the NR carrier. FIG. 6 illustrates an LTE-M carrier with guard band.

In this case, the maximum and minimum possible values of $k^*$ depend on the LTE-M and NR channel bandwidths as well as the guard band $G$ used for LTE-M. According to FIG. 6, the maximum and minimum frequencies that need to be reserved for embedding LTE-M with guard band are, respectively,

$$(F_{LTEM} + B_L/2 + G), \text{ and } (F_{LTEM} - B_L/2 - G).$$

To ensure that the LTE-M carrier with guard band is entirely placed in the NR carrier, the following conditions must be met:

$$(F_{LTEM} + B_L/2 + G) \le F_C + B_{nr}/2$$

$$(F_{LTEM} - B_L/2 - G) \ge F_C - B_{nr}/2$$

where $B_{nr}$ is the NR channel bandwidth and $B_L$ is the operational bandwidth for LTE-M (e.g., 1095 kHz). Considering equation (1), the feasible range of $k^*$ for deploying an LTE-M carrier inside the NR is:

$$\frac{B_L/2 + G - B_{nr}/2 - 15}{30} \le k^* \le \frac{B_{nr}/2 - B_L/2 - G - 15}{30} \quad (6)$$

In this example equation, the NR subcarrier spacing $N_S$ is 30 kHz.

### LTE-M placement inside NR given the required guard band

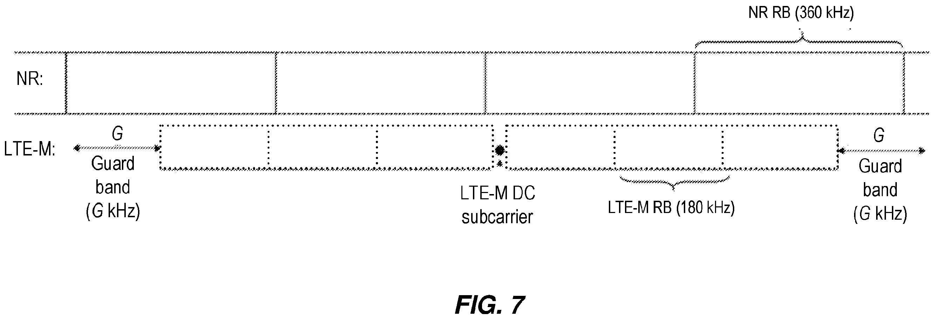

Possible locations of an LTE-M carrier center for which the maximum subcarrier grid alignment is achieved between NR and LTE-M was provided in Table 2. The location of the LTE-M carrier impacts the number of NR resource blocks that overlap with LTE-M resource blocks. In this scenario, it can be assumed that the amount of required guard band G between the LTE-M carrier and NR is given. FIG. 7 illustrates the placing of LTE-M with guard band inside NR.

One goal is to identify possible locations of the LTE-M carrier center inside an NR carrier so as to occupy the minimum number of NR resource blocks. Among the LTE-M carrier center locations that ensure the maximum subcarrier grid alignment, those locations that lead to the minimum NR resource reservation are identified.

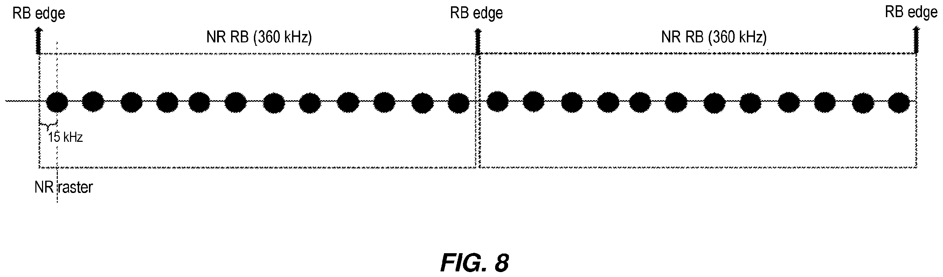

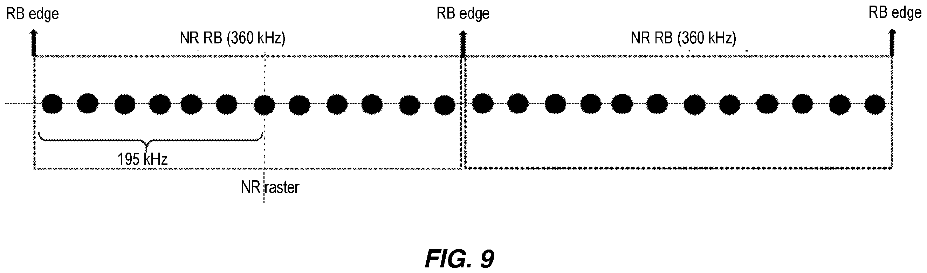

First, according to some embodiments, the edge frequencies of NR RBs (i.e., the minimum and maximum frequencies of each RB) are found relative to the NR channel raster. FIGS. 8 and 9 illustrate RB edges for even and odd numbers of NR resource blocks, respectively. For an even number of NR RBs, the minimum and maximum frequencies of the first RB, relative to the NR raster is:

$$F_{min} = \text{-15 kHz}$$

$$F_{max} = F_{min} + 360 = 345 \text{ kHz}$$

In this example, the NR RB bandwidth is 360 kHz, or 12 subcarriers at a spacing of 30 kHz. Therefore, relative to the NR raster, the edge frequencies of RBs can be given by:

$$\text{RB\_edge\_freq\_even} = -15 + 360L \text{ [kHz]} \qquad (7)$$

where $L$ is an integer in set $\{- N_{RB}/2+1,..., N_{RB}/2+1 \}$, with $N_{RB}$ being the total number of NR RBs.

For an odd number of NR RBs, the minimum and maximum frequencies of the first RB, relative to the NR raster is:

$$F_{min} = -195 \text{ kHz}$$

$$F_{max} = F_{min} + 360 = 165 \text{ kHz}$$

Therefore, relative to the NR raster, the edge frequencies of RBs can be given by:

$$\text{RB\_edge\_freq\_odd} = -195 + 360L \text{ [kHz]} \qquad (8)$$

where $L$ is an integer in set $\{ - (N_{RB}-1)/2, ..., (N_{RB}-1)/2+1\}$, with $N_{RB}$ being the total number of NR RBs.

The minimum number of NR RBs that need to be used for deploying an LTE-M carrier is calculated by:

$$N = \left\lceil \frac{\text{total bandwidth occupied by LTE−M}}{\text{NR RB bandwidth}} \right\rceil = \left\lceil \frac{B_L + 2G, \ (kHz)}{360, \ (kHz)} \right\rceil \qquad (9)$$

where $\lceil \cdot \rceil$ is the ceiling function. In this case, $N$ NR RBs must be used for LTE-M deployment. Note that in a non-optimal case, $(N + 1)$ NR RBs must be used. Next, the locations of the LTE-M carrier center are identified such that the minimum number of NR RBs (i.e., $N$) are occupied. The LTE-M carrier center frequency (relative to NR raster) may be:

$$F_{LTEM} = 30k^* \text{ [kHz]} \qquad (10)$$

Subsequently, to ensure that the LTE-M resource block overlaps with only $N$ NR RBs, the following applies. For an even number of NR RBs:

$$(-15 + 360L) + (B_L/2 + G) \leq F_{LTEM} \leq \left(-15 + 360(L + N)\right) - (B_L/2 + G)$$

where $(-N_{RB}/2 + 1) \leq L \leq N_{RB}/2$ is an integer. This leads to:

$$\frac{360L + B_L/2 + G - 15}{30} \leq k^* \leq \frac{360(L + N) - B_L/2 - G - 15}{30} \qquad (11)$$

For an LTE-M carrier with 6 RBs and one DC subcarrier (in total 73 subcarriers), $B_L$ = 1095 [$kHz$]. For an odd number of NR RBs:

$$(-195 + 360L) + (B_L/2 + G) \leq F_{LTEM} \leq \left(-195 + 360(L + N)\right) - (B_L/2 + G)$$

where $-(N_{RB} - 1)/2 \leq L \leq (N_{RB} - 1)/2$ is an integer. This leads to:

$$\frac{360L + B_L/2 + G - 195}{30} \leq k^* \leq \frac{360(L+N) - B_L/2 - G - 195}{30} \quad (12)$$

For example, for G = 100 kHz and a 10 MHz NR channel bandwidth (with 24 resource blocks), N and the range of $k^*$ for placing the LTE-M carrier center are computed. Using (9), for an even number of NR resource blocks:

$$N = \left\lceil \frac{1295, \ (kHz)}{360, \ (kHz)} \right\rceil = 4$$

$$\frac{360L + 1095/2 + 100 - 15}{30} \leq k^* \leq \frac{360(L+4) - 1095/2 - 100 - 15}{30} \quad (13)$$

$$12L + 22 \leq k^* \leq 12L + 25 \quad (14)$$

Considering Table 2, for instance k* = 10 (10 = 12 × (-1) + 22) satisfies the condition in (14). Therefore, placing the LTE-M carrier center on $F_{LTEM}$ = 30 × 10 = 300 kHz relative to the NR raster, ensures maximum subcarrier grid alignment while overlapping with the minimum number of NR RBs. In this case, four NR RBs are used.

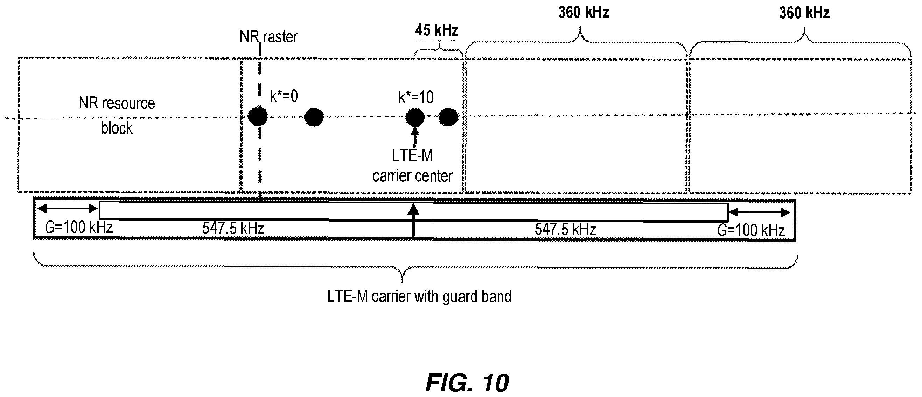

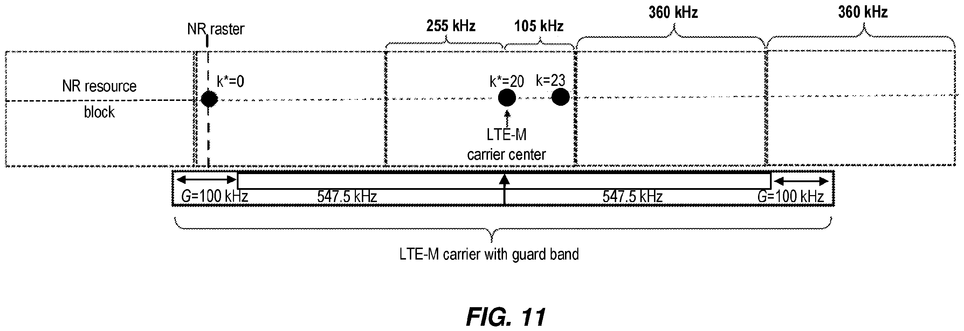

While for $k^*$ = 20 (according to Table 2) and the maximum subcarrier grid alignment between NR and LTE-M, five NR RBs must be used for deploying the LTE-M carrier. FIGS. 10 and 11 illustrate this example for $k^*$ = 10 and $k^*$ = 20. FIG. 10 illustrates an LTE-M carrier with guard band overlaps with four NR resource blocks ($k^*$ = 10). FIG. 11 illustrates an LTE-M carrier with guard band overlaps with five NR resource blocks ($k^*$ = 20).

In summary, the following steps may be used to find optimal locations of an LTE-M carrier center for which the minimum number of NR RBs are used for deploying LTE-M carrier, according to some embodiments. First, find $k^*$ values that lead to the maximum subcarrier grids alignment between LTE-M and NR. Equations (4) and (6) can be used for this step. Second, compute the minimum number of NR RBs which need to be used for deploying an LTE-M carrier. Equation (9) can be used for this step. Third, for an even number of NR resource blocks, use equation (11) to find the range of $k^*$. For an odd number of NR resource blocks, use equation (12) to find the range of $k^*$. Fourth, the optimal values of $k^*$ can be found using the results of the first and third steps. Fifth, the optimal frequencies of an LTE-M carrier center, relative to the NR raster, are: $F_{LTEM}$ = 30$k^*$ [kHz].

Note that for any given value of LTE-M guard band (i. e. , G), this approach can find the best positions of the LTE-M carrier center for which the minimum number of NR RBs is used for deploying the LTE-M carrier inside NR.

The NR raster may be located at subcarrier #0 in an RB with index $N_{RB}$/2 for an even number of RBs. The NR raster may be located at subcarrier #6 in an RB with index ($N_{RB}$-1)/2 for an odd number of RBs. The subcarrier #0 corresponds to the lowest subcarrier in frequency in an RB and subcarrier index #11 corresponds to the highest subcarrier in frequency in an RB.

### *Examples with Known Guard Bands*

In the following examples for two different guard bands (G = 100 kHz and 300 kHz), the optimal locations of an LTE-M carrier for various NR channel bandwidths are identified.

In the first example, G = 100 kHz, where there is 100 kHz of guard band on each side of the LTE-M carrier. With the proposed approach (optimal case), the minimum number of NR RBs used for deploying the LTE-M carrier is: N = 4. In a non-optimal case, N + 1 = 5 NR RBs are used. Therefore, this approach enhances the resource utilization by 20%.

Table 3 shows possible locations, or offset positions, of the LTE-M carrier center, in number of NR subcarriers, relative to the NR raster when G = 100 kHz and NR subcarrier spacing is 30 kHz.

**Table 3**

| NR channel bandwidth and the number of RBs ($N_{RB}$) for 30 kHz subcarrier spacing | Possible indexes of NR subcarriers $k^*$ (relative to NR raster). LTE-M center is placed on (30 $k^*$, kHz) relative to the NR channel raster |
|---|---|
| 10 MHz, $N_{RB}$= 24 | -120 -110 -60 -50 0 10 60 70 120 130 |
| 15 MHz, $N_{RB}$= 38 | -180 -170 -120 -110 -60 -50 0 10 60 70 120 130 180 190 |

(continued)

| NR channel bandwidth and the number of RBs ($N_{RB}$) for 30 kHz subcarrier spacing | Possible indexes of NR subcarriers $k^*$ (relative to NR raster). LTE-M center is placed on (30 $k^*$, kHz) relative to the NR channel raster |
|---|---|
| 20 MHz, $N_{RB}$= 51 | -290 -240 -230 -180 -170 -120 -110 -60 -50 0 10 60 70 120 130 180 190 240 250 300 |
| 25 MHz, $N_{RB}$= 65 | -360 -350 -300 -290 -240 -230 -180 -170 -120 -110 -60 -50 0 10 60 70 120 130 180 190 240 250 300 310 360 370 |
| 30 MHz, $N_{RB}$= 78 | -420 -410 -360 -350 -300 -290 -240 -230 -180 -170 -120 -110 -60 -50 0 10 60 70 120 130 180 190 240 250 300 310 360 370 420430 |
| 40 MHz, $N_{RB}$= 106 | -600 -590 -540 -530 -480 -470 -420 -410 -360 -350 -300 -290 -240 -230 -180 -170 -120 -110 -60 -50 0 10 60 70 120 130 180 190 240 250 300 310 360 370 420 430 480 490 540 550 600 610 |
| 50 MHz, $N_{RB}$= 133 | -780 -770 -720 -710 -660 -650 -600 -590 -540 -530 -480 -470 -420 -410 -360 -350 -300 -290 -240 -230 -180 -170 - 120 -110 -60 -50 0 10 60 70 120 130 180 190 240 250 300 310 360 370 420 430 480 490 540 550 600 610 660 670 720 730 780 790 |
| 60 MHz, $N_{RB}$= 162 | -950 -900 -890 -840 -830 -780 -770 -720 -710 -660 -650 -600 -590 -540 -530 -480 -470 -420 -410 -360 -350 -300 -290 -240 -230 -180 -170 -120 -110 -60 -50 0 10 60 70 120 130 180 190 240 250 300 310 360 370 420 430 480 490 540 550 600 610 660 670 720 730 780 790 840 850 900 910 960 970 |
| 80 MHz, $N_{RB}$= 217 | -1260 -1250 -1200 -1190 -1140 -1130 -1080 -1070 -1020 -1010 -960 -950 -900 -890 -840 -830 -780 -770 -720 -710 -660 -650 -600 -590 -540 -530 -480 -470 -420 -410 -360 -350 -300 -290 -240 -230 -180 -170 -120 -110 -60 -50 0 10 60 70 120 130 180 190 240 250 300 310 360 370 420 430 480 490 540 550 600 610 660 670 720 730 780 790 840 850 900 910 960 970 1020 1030 1080 1090 1140 1150 1200 1210 1260 1270 |
| 100 MHz, $N_{RB}$= 273 | -1620 -1610 -1560 -1550 -1500 -1490 -1440 -1430 -1380 -1370 -1320 -1310 -1260 -1250 -1200 -1190 -1140 -1130 -1080 -1070 -1020 -1010 -960 -950 -900 -890 -840 -830 -780 -770 -720 -710 -660 -650 -600 -590 -540 -530 -480 -470 -420 -410 -360 -350 -300 -290 -240 -230 -180 -170 -120 -110 -60 -50 0 10 60 70 120 130 180 190 240 250 300 310 360 370 420 430 480 490 540 550 600 610 660 670 720 730 780 790 840 850 900 910 960 970 1020 1030 1080 1090 1140 1150 1200 1210 1260 1270 1320 1330 1380 1390 1440 1450 1500 1510 1560 1570 1620 1630 |

Table 4 is another representation of the possible positions for the center of the LTE-M carrier is positioned relative to the NR channel raster, considering 100 kHz guard band, according to any offset position in the following table:

**Table 4**

| NR bandwidth (MHz) | Offset positions of the LTE-M carrier center, in number of NR subcarriers relative to the NR raster |
|---|---|
| 10 | n30 for even integers n from -4 to 4; and |
| | -20+n30 for odd integers n from -3 to 5 |
| 15 | n30 for even integers n from -6 to 6; and -20+n30 for odd integers n from -5 to 7 |
| 20 | n30 for even integers n from -8 to 10; and -20+n30 for odd integers n from -9 to 9 |
| 25 | n30 for even integers n from -12 to 12; and -20+n30 for odd integers n from -11 to 13 |
| 30 | n30 for even integers n from -14 to 14; and -20+n30 for odd integers n from -13 to 15 |
| 40 | n30 for even integers n from -20 to 20; and -20+n30 for odd integers n from -19 to 21 |
| 50 | n30 for even integers n from -26 to 26; and -20+n30 for odd integers n from -25 to 27 |
| 60 | n30 for even integers n from -30 to 31; and -20+n30 for odd integers n from -31 to 33 |

(continued)

| NR bandwidth (MHz) | Offset positions of the LTE-M carrier center, in number of NR subcarriers relative to the NR raster |
|---|---|
| 80 | n30 for even integers n from -42 to 42; and -20+n30 for odd integers n from --41 to 43 |
| 100 | n30 for even integers n from -54 to 54; and -20+n30 for odd integers n from -53 to 55 |

Note that in the tables, a non-negative integer n as a position of the LTE-M carrier center, in NR subcarriers relative to the NR raster, may indicate that the position of the LTE-M carrier center is above the NR raster (e.g., 30n kHz above the raster). Similarly, a negative integer n in claims 2, 3, 4, 5, 6, 8, 9, 11 as a position of the LTE-M carrier center, in NR subcarriers relative to the NR raster, may indicate that the position of the LTE-M carrier center is below the NR raster (e.g., |30n| kHz below the NR raster).

In a second scenario, G = 300 kHz, where there is 300 kHz of guard band on each side of the LTE-M carrier. With the proposed approach (optimal case), the minimum number of NR RBs used for deploying the LTE-M carrier is: $N = 5$. In a non-optimal case, $N + 1 = 6$ NR RBs are used. Therefore, this approach enhances the resource utilization by 16.7%.

Table 5 shows possible locations, or offset positions, of the LTE-M carrier center when G = 300 kHz.

**Table 5**

| NR channel bandwidth and the number of RBs ($N_{RB}$) for 30 kHz subcarrier spacing | Possible indexes of NR subcarriers $k^*$ (relative to NR raster). LTE-M center is placed on (30 $k^*$, kHz) relative to the NR channel raster |
|---|---|
| 10 MHz, $N_{RB}$= 24 | -90 -80 -30 -20 30 40 90 100 |
| 15 MHz, $N_{RB}$= 38 | -200 -150 -140 -90 -80 -30 -20 30 40 90 100 150 160 210 220 |
| 20 MHz, $N_{RB}$= 51 | -270 -260 -210 -200 -150 -140 -90 -80 -30 -20 30 40 90 100 150 160 210 220 270 280 |
| 25 MHz, $N_{RB}$= 65 | -330 -320 -270 -260 -210 -200 -150 -140 -90 -80 -30 -20 30 40 90 100 150 160 210 220 270 280 330 340 |
| 30 MHz, $N_{RB}$= 78 | -440 -390 -380 -330 -320 -270 -260 -210 -200 -150 -140 -90 -80 -30 -20 30 40 90 100 150 160 210 220 270 280 330 340 390 400 450 460 |
| 40 MHz, $N_{RB}$= 106 | -570 -560 -510 -500 -450 -440 -390 -380 -330 -320 -270 -260 -210 -200 -150 -140 -90 -80 -30 -20 30 40 90 100 150 160 210 220 270 280 330 340 390 400 450 460 510 520 570 580 630 |
| 50 MHz, $N_{RB}$= 133 | -750 -740 -690 -680 -630 -620 -570 -560 -510 -500 -450 -440 -390 -380 -330 -320 -270 -260 -210 -200 -150 -140 -90 -80 -30 -20 30 40 90 100 150 160 210 220 270 280 330 340 390 400 450 460 510 520 570 580 630 640 690 700 750 760 |
| 60 MHz, $N_{RB}$= 162 | -930 -920 -870 -860 -810 -800 -750 -740 -690 -680 -630 -620 -570 -560 -510 -500 -450 -440 -390 -380 -330 -320 -270 -260 -210 -200 -150 -140 -90 -80 -30 -20 30 40 90 100 150 160 210 220 270 280 330 340 390 400 450 460 510 520 570 580 630 640 690 700 750 760 810 820 870 880 930 940 |
| 80 MHz, $N_{RB}$= 217 | -1280 -1230 -1220 -1170 -1160 -1110 -1100 -1050 -1040 -990 -980 -930 -920 -870 -860 -810 -800 -750 -740 -690 -680 -630 -620 -570 -560 -510 -500 -450 -440 -390 -380 -330 -320 -270 -260 -210 -200 -150 -140 -90 -80 -30 -20 30 40 90 100 150 160 210 220 270 280 330 340 390 400 450 460 510 520 570 580 630 640 690 700 750 760 810 820 870 880 930 940 990 1000 1050 1060 1110 1120 1170 1180 1230 1240 1290 1300 |

(continued)

| NR channel bandwidth and the number of RBs ($N_{RB}$) for 30 kHz subcarrier spacing | Possible indexes of NR subcarriers $k^*$ (relative to NR raster). LTE-M center is placed on (30 $k^*$, kHz) relative to the NR channel raster |
|---|---|
| 100 MHz, $N_{RB}$= 273 | -1590 -1580 -1530 -1520 -1470 -1460 -1410 -1400 -1350 -1340 -1290 -1280 -1230 -1220 -1170 -1160 -1110 -1100 -1050 -1040 -990 -980 -930 -920 -870 -860 -810 -800 -750 -740 -690 -680 -630 -620 -570 -560 -510 -500 -450 -440 -390 -380 -330 -320 -270 -260 -210 -200 -150 -140 -90 -80 -30 -20 30 40 90 100 150 160 210 220 270 280 330 340 390 400 450 460 510 520 570 580 630 640 690 700 750 760 810 820 870 880 930 940 990 1000 1050 1060 1110 1120 1170 1180 1230 1240 1290 1300 1350 1360 1410 1420 1470 1480 1530 1540 1590 1600 |

Table 6 is another representation of the possible positions for the center of the LTE-M carrier positioned relative to the NR channel raster, considering 300 kHz guard band, according to any offset position in the following table:

**Table 6**

| NR bandwidth (MHz) | Offset positions of the LTE-M carrier center, in number of NR subcarriers relative to the NR raster |
|---|---|
| 10 | -20+n60 for integers n from -1 to 2; and<br>-30+n60 for integers n from -1 to 2 |
| 15 | -20+n60 for integers n from -3 to 4; and<br>-30+n60 for integers n from -2 to 4 |
| 20 | -20+n60 for integers n from -4 to 5; and<br>-30+n60 for integers n from -4 to 5 |
| 25 | -20+n60 for integers n from -5 to 6; and<br>-30+n60 for integers n from -5 to 6 |
| 30 | -20+n60 for integers n from -7 to 8; and<br>-30+n60 for integers n from -6 to 8 |
| 40 | -20+n60 for integers n from -9 to 10; and<br>-30+n60 for integers n from -9 to 11 |
| 50 | -20+n60 for integers n from -12 to 13; and<br>-30+n60 for integers n from -12 to 13 |
| 60 | -20+n60 for integers n from -15 to 16; and<br>-30+n60 for integers n from -15 to 16 |
| 80 | -20+n60 for integers n from -21 to 22; and<br>-30+n60 for integers n from -20 to 22 |
| 100 | -20+n60 for integers n from -26 to 27; and<br>-30+n60 for integers n from -26 to 27 |

### LTE-M placement inside NR given the number of NR RBs that can be reserved

In this scenario, the number of NR RBs that can be used for deploying the LTE-M carrier is given. For instance, let $q$ be a fixed number of NR RBs which are reserved for placing the LTE-M carrier. One goal is to find the optimal locations of the LTE-M carrier center such that the maximum guard band can be considered between NR and LTE-M, within the given number of NR RBs. Clearly, having more guard band between NR and LTE-M can lead to a lower inter-subcarrier interference between the two systems.

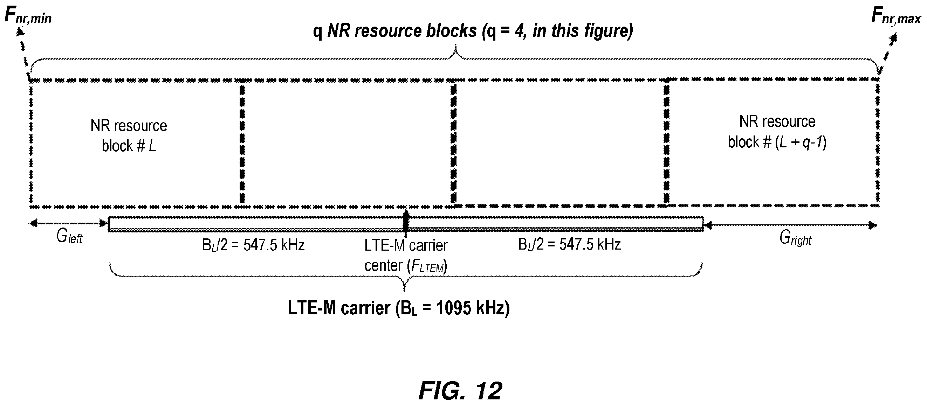

This scenario is illustrated in FIG. 12, which shows placement of an LTE-M carrier inside $q$ reserved NR RBs. $F_{nr,min}$ and $F_{nr,max}$ are the minimum and maximum frequencies of NR resource blocks reserved for deploying LTE-M. $G_{right}$ and $C_{left}$ are the maximum guard bands that can be considered between LTE-M and NR, on the right and left sides of the LTE-M carrier. $B_L$ is the LTE-M carrier bandwidth (e.g., $B_L$ = 1095 $kHz$). The LTE-M carrier is placed between NR RBs with indexes $L$ and $(L + q - 1)$, where $L$ and $q$ are integers. $N_{RB}$ may also be used in place of $q$ to represent the number of NR RBs in the equations below.

Considering FIG. 12 and using equations (7) and (8) for finding the edge frequencies of the NR RBs, for an even number of NR RBs:

$$F_{nr,min} = -15 + 360L \qquad (15)$$

$$F_{nr,max} = -15 + 360(L + q) \qquad (16)$$

For an odd number of NR RBs:

$$F_{nr,min} = -195 + 360L \qquad (17)$$

$$F_{nr,max} = -195 + 360(L + q) \qquad (18)$$

As a result, the maximum guard band at left (lower frequency) and right (higher frequency) of the LTE-M carrier are:

$$G_{right} = F_{nr,max} - (F_{LTEM} + B_L/2) \qquad (19)$$

$$G_{left} = (F_{LTEM} - B_L/2) - F_{nr,min} \qquad (20)$$

For a symmetric guard band case, the maximum guard band between LTE-M and NR, within $q$ NR RBs is given by:

$$G_{sym} = min\{G_{right}, G_{left}\} \qquad (21)$$

One goal is to maximize $G_{sym}$ by efficiently placing the LTE-M carrier inside the given number of NR RBs. In other words, among the possible locations of the LTE-M carrier center, those that allow using the maximum guard band for LTE-M, while occupying $q$ NR RBs, are selected. The following steps may be used to find the optimal positions of the LTE-M carrier center inside the given number of NR RBs. First, for every possible location of the LTE-M carrier obtained using equation (10), find parameter $L$ that is used to determine NR RBs' edges:

$$L = \left\lfloor \frac{(F_{LTEM} - B_L/2) + 15}{360} \right\rfloor$$

where $\lfloor \cdot \rfloor$ is the floor function. Second, given $L, q$ and $F_{LTEM}$, compute the guard band using equations (15)-(21). Third, select the locations of the LTE-M carrier center (i.e., $F_{LTEM}$) for which we can have the maximum guard band.

In Tables 7-10, for various NR channel bandwidths, the optimal positions of the LTE-M carrier inside 4 and 5 NR RBs to achieve maximum guard band are identified. Moreover, the maximum guard band ($G_{sym}$) between NR and LTE-M RBs are given.

**Table 7**

| NR channel bandwidth and the number of RBs ($N_{RB}$) for 30 kHz subcarrier spacing | Possible indexes of NR subcarriers $k^*$ (relative to NR raster). LTE-M center is placed on (30 $k^*$, kHz) relative to the NR channel raster | Maximum guard band ($G_{sym}$) that can be considered between LTE-M and NR while occupying 4 NR RBs (kHz) |
|---|---|---|
| 10 MHz, $N_{RB}$= 24 | -120 -60 0 60 120 | 157.5 |
| 15 MHz, $N_{RB}$= 38 | -180 -120 -60 0 60 120 180 | 157.5 |

(continued)

| NR channel bandwidth and the number of RBs ($N_{RB}$) for 30 kHz subcarrier spacing | Possible indexes of NR subcarriers $k^*$ (relative to NR raster). LTE-M center is placed on (30 $k^*$, kHz) relative to the NR channel raster | Maximum guard band ($G_{sym}$) that can be considered between LTE-M and NR while occupying 4 NR RBs (kHz) |
|---|---|---|
| 20 MHz, $N_{RB}$= 51 | -270 -210 -150 -90 -30 30 90 150 210 270 | 157.5 |
| 25 MHz, $N_{RB}$= 65 | -390 -330 -270 -210 -150 -90 -30 30 90 150 210 270 330 | 157.5 |
| 30 MHz, $N_{RB}$= 78 | -420 -360 -300 -240 -180 -120 -60 0 60 120 180 240 300 360 420 | 157.5 |
| 40 MHz, $N_{RB}$= 106 | -600 -540 -480 -420 -360 -300 -240 -180 -120 -60 0 60 120 180 240 300 360 420 480 540 600 | 157.5 |
| 50 MHz, $N_{RB}$= 133 | -750 -690 -630 -570 -510 -450 -390 -330 -270 -210 -150 -90 -30 30 90 150 210 270 330 390 450 510 570 630 690 750 | 157.5 |
| 60 MHz, $N_{RB}$= 162 | -960 -900 -840 -780 -720 -660 -600 -540 -480 -420 -360 -300 -240 -180 -120 -60 0 60 120 180 240 300 360 420 480 540 600 660 720 780 840 900 960 | 157.5 |
| 80 MHz, $N_{RB}$= 217 | -1290 -1230 -1170 -1110 -1050 -990 -930 -870 -810 -750 -690 -630 -570 -510 -450 -390 -330 -270 -210 -150 -90 -30 30 90 150 210 270 330 390 450 510 570 630 690 750 810 870 930 990 1050 1110 1170 1230 1290 | 157.5 |
| 100 MHz, $N_{RB}$= 273 | -1590 -1530 -1470 -1410 -1350 -1290 -1230 -1170 -1110 -1050 -990 -930 -870 -810 -750 -690 -630 -570 -510 -450 -390 -330 -270 -210 -150 -90 -30 30 90 150 210 270 330 390 450 510 570 630 690 750 810 870 930 990 1050 1110 1170 1230 1290 1350 1410 1470 1530 1590 | 157.5 |

In Table 7, the maximum guard band bandwidth from each end of the LTE-M carrier to the respective immediately adjacent NR resource block not occupied by any of part of the LTE-M carrier and the guard bands is 157.5 kHz.

Table 8 is another representation of the possible positions for the center of the LTE-M carrier relative to the NR raster, considering 4 NR resource blocks and 30 kHz NR subcarrier spacing.

**Table 8**

| NR bandwidth (MHz) | Offset positions of the LTE-M carrier center, in number of NR subcarriers relative to the NR raster |
|---|---|
| 10 | n60 where n is integer from -2 to 2 |
| 15 | n60 where n is integer from -3 to 3 |
| 20 | -30+n60 where n is integer from -4 to 5 |
| 25 | -30+n60 where n is integer from -6 to 6 |
| 30 | n60 where n is integer from -7 to 7 |
| 40 | n60 where n is integer from -10 to 10 |
| 50 | -30+n60 where n is integer from -12 to 13 |
| 60 | n60 where n is integer from -16 to 16 |
| 80 | -30+n60 where n is integer from -21 to 22 |
| 100 | -30+n60 where n is integer from -26 to 27 |

Table 9 shows possible positions for the center of the LTE-M carrier relative to the NR raster, considering 5 NR resource blocks and 30 kHz NR subcarrier spacing, to achieve maximum guard band between NR and LTE-M.

**Table 9**

| NR channel bandwidth and the number of RBs ($N_{RB}$) for 30 kHz subcarrier spacing | Possible indexes of NR subcarriers $k^*$ (relative to NR raster). LTE-M center is placed on (30 $k^*$, kHz) relative to the NR channel raster | Maximum guard band ($G_{sym}$) that can be considered between LTE-M and NR while occupying 5 NR RBs (kHz) |
|---|---|---|
| 10 MHz, $N_{RB}$= 24 | -140 -80 -20 40 100 | 307.5 |
| 15 MHz, $N_{RB}$= 38 | -200 -140 -80 -20 40 100 160 220 | 307.5 |
| 20 MHz, $N_{RB}$= 51 | -290 -230 -170 -110 -50 10 70 130 190 250 | 307.5 |
| 25 MHz, $N_{RB}$= 65 | -350 -290 -230 -170 -110 -50 10 70 130 190 250 310 370 | 307.5 |
| 30 MHz, $N_{RB}$= 78 | -440 -380 -320 -260 -200 -140 -80 -20 40 100 160 220 280 340 400 460 | 307.5 |
| 40 MHz, $N_{RB}$= 106 | -620 -560 -500 -440 -380 -320 -260 -200 -140 -80 -20 40 100 160 220 280 340 400 460 520 580 | 307.5 |
| 50 MHz, $N_{RB}$= 133 | -770 -710 -650 -590 -530 -470 -410 -350 -290 -230 -170 -110 -50 10 70 130 190 250 310 370 430 490 550 610 670 730 790 | 307.5 |
| 60 MHz, $N_{RB}$= 162 | -920 -860 -800 -740 -680 -620 -560 -500 -440 -380 -320 -260 -200 -140 -80 -20 40 100 160 220 280 340 400 460 520 580 640 700 760 820 880 940 | 307.5 |
| 80 MHz, $N_{RB}$= 217 | -1250 -1190 -1130 -1070 -1010 -950 -890 -830 -770 -710 -650 -590 -530 -470 -410 -350 -290 -230 -170 -110 -50 10 70 130 190 250 310 370 430 490 550 610 670 730 790 850 910 970 1030 1090 1150 1210 1270 | 307.5 |
| 100 MHz, $N_{RB}$= 273 | -1610 -1550 -1490 -1430 -1370 -1310 -1250 -1190 -1130 -1070 -1010 -950 -890 -830 -770 -710 -650 -590 -530 -470 -410 -350 -290 -230 -170 -110 -50 10 70 130 190 250 310 370 430 490 550 610 670 730 790 850 910 970 1030 1090 1150 1210 1270 1330 1390 1450 1510 1570 1630 | 307.5 |

In Table 9, the maximum guard band bandwidth is 307.5 kHz.

Table 10 is another representation of the possible positions for the center of the LTE-M carrier relative to the NR raster, considering 5 NR resource blocks, according to any offset position in the following table:

**Table 10**

| NR bandwidth (MHz) | Offset positions of the LTE-M carrier center, in number of NR subcarriers relative to the NR raster |
|---|---|
| 10 | -20+n60 where n is integer from -2 to 2 |
| 15 | -20+n60 where n is integer from -3 to 4 |
| 20 | -50+n60 where n is integer from -4 to 5 |
| 25 | -50+n60 where n is integer from -5 to 7 |
| 30 | -20+n60 where n is integer from -7 to 8 |
| 40 | -20+n60 where n is integer from -10 to 10 |
| 50 | -50+n60 where n is integer from -12 to 14 |
| 60 | -20+n60 where n is integer from -15 to 16 |

(continued)

| NR bandwidth (MHz) | Offset positions of the LTE-M carrier center, in number of NR subcarriers relative to the NR raster |
|---|---|
| 80 | -50+n60 where n is integer from -20 to 22 |
| 100 | -50+n60 where n is integer from -26 to 28 |

The equations for determining optimal positions for the center of the LTE-M carrier may be applicable to NR subcarrier spacings other than 30 kHz. For example, NR subcarrier spacing may be 60 kHz or greater. The NR subcarrier index $k^*$ relative to the NR raster, where $k^*$ is in a set $k^*=10q$ and where q is an integer, may be shown to be in the range:

$$\frac{B_L/2 + G - B_{nr}/2 - 15}{N_S} \leq k^* \leq \frac{B_{nr}/2 - B_L/2 - G - 15}{N_S},$$

where $N_S$ is NR subcarrier spacing, $B_L$ is operational bandwidth for LTE-M, $B_{nr}$ is the NR bandwidth and G represents bandwidth of the guard bands for the LTE-M carrier. The LTE-M carrier center is positioned at $k^*$ according to one of the following equations, where $N_{RB}$ is the number of NR resource blocks:

$$\frac{(12N_S)L + B_L/2 + G - 15}{N_S} \leq k^* \leq \frac{(12N_S)(L + N_{RB}) - B_L/2 - G - 15}{N_S}$$

for an even number of NR resource blocks, where $L$ is an integer and $(-N_{RB}/2 + 1) \leq L \leq N_{RB}/2$; and

$$\frac{(12N_S)L + B_L/2 + G - 15 - (12N_S/2)}{N_S} \leq k^*$$

$$\leq \frac{(12N_S)(L + N_{RB}) - B_L/2 - G - 15 - (12N_S/2)}{N_S}$$

for an odd number of NR resource blocks, where $L$ is an integer and $-(N_{RB} - 1)/2 \leq L \leq (N_{RB} - 1)/2$.
In some cases, the minimum number $N$ of NR RBs needed for the LTE-M carrier is:

$$N = \left\lceil \frac{B_L + 2G}{(12N_S)} \right\rceil$$

where $\lceil \cdot \rceil$ is a ceiling function.
Accordingly, the other equations may be, for a minimum frequency $F_{nr,min}$ = -15 + $(12N_S)L$ and a maximum frequency $F_{nr,max}$ = -15 + $(12N_S)(L + N_{RB})$ for an even number of NR resource blocks. For an odd number of NR resource blocks, a minimum frequency $F_{nr,min}$ = -15 - $(12N_S/2)$ + $(12N_S)L$ and a maximum frequency $F_{nr,max}$ = -15 - $(12N_S/2)$ + $(12N_S)(L + N_{RB})$. The maximum guard band at left (lower frequency) and right (higher frequency) sides of the LTE-M carrier are $G_{right}$ = $F_{nr,max}$ - $(F_{LTEM} + B_L/2)$ and $G_{left}$ = $(F_{LTEM} - B_B/2)$ - $F_{nr,min}$., where $F_{LTEM}$ is the LTE-M carrier center. In some cases, $L$ is:

$$L = \left\lfloor \frac{(F_{LTEM} - B_L/2) + 15}{(12N_S)} \right\rfloor$$

where $\lfloor \cdot \rfloor$ is the floor function. The LTE-M carrier center $F_{LTEM}$ is in a position in the range of $k^*$ where $L$ maximizes the $G_{left}$ and the $G_{right}$.

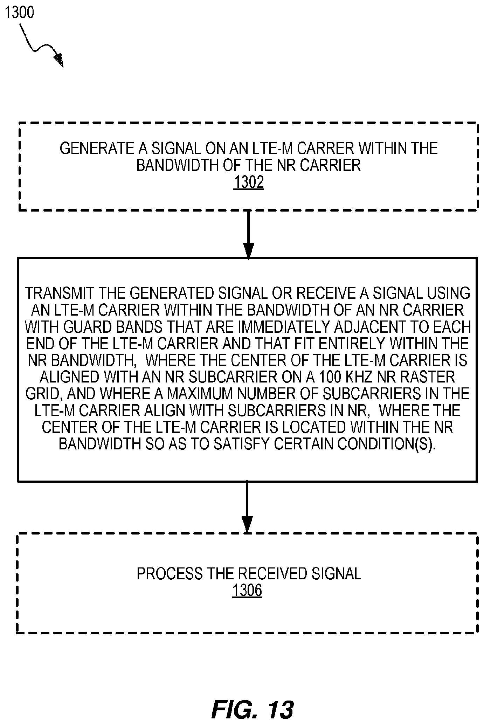

FIG. 13 illustrates a method 1300, according to some embodiments, for communicating in a wireless communication network that includes transmitting or receiving using an LTE-M carrier within the bandwidth of an NR carrier with guard bands that are immediately adjacent to each end of the LTE-M carrier and that fit entirely within the NR bandwidth, where the center of the LTE-M carrier is aligned with an NR subcarrier on a 100 kHz NR raster grid, and where a maximum number of subcarriers in the LTE-M carrier align with subcarriers in NR. The center of the LTE-M carrier is located within the NR bandwidth such that at least one of: 1) a minimum number of NR resource blocks are occupied by any part of the LTE-M carrier and the guard bands at each end, given a predetermined bandwidth for each of the guard bands; and 2) given a predetermined number of NR resource blocks that can be occupied by any part of the LTE-M carrier and the guard bands at each end, a minimum guard band bandwidth from each end of the LTE-M carrier to the respective immediately adjacent NR resource block not occupied by any of part of the LTE-M carrier and the guard bands is maximized (block 1304).

In some cases, method 1300 may include generating a signal and the transmitting or receiving may include transmitting the generated signal on the LTE-M carrier within the bandwidth of the NR carrier (block 1302). In other cases, transmitting or receiving may include receiving a signal on the LTE-M carrier within the bandwidth of the NR carrier and method 1300 may further include processing the received signal (block 1306). This may include searching for the LTE-M carrier within the bandwidth of the NR carrier according to the NR channel raster.

According to some embodiments, the certain amount of guard band is predetermined and wherein the center of the LTE-M carrier is positioned within the NR carrier, based on the predetermined amount of the guard band, to minimize the number of NR resource blocks occupied by the LTE-M carrier and the guard band.

In other embodiments, the center of the LTE-M carrier is positioned within the NR carrier so as to minimize the number of NR resource blocks occupied by the LTE-M carrier and the guard band, based on a given number of available NR resource blocks. The center of the LTE-M carrier may be positioned within the NR carrier so as to maximize the certain amount of guard band at both ends of the LTE-M carrier, while using the minimum number of NR resource blocks, as compared to an amount of guard band that would be available at other grid-aligned subcarrier positions for the LTE-M carrier.

In some embodiments, the center of the LTE-M carrier is positioned at $\pm n10$ kHz relative to the NR channel raster , considering 30 kHz subcarrier spacing, where n is an integer among a set of consecutive integers defined for the NR bandwidth. The relationship between LTE-M and NR can be explained as follows. NR and LTE-M subcarrier alignment may occur according to the equation: $100n = 100m + 30k$, where $100m$ kHz represents the possible frequencies of NR raster, 30 kHz represents NR subcarrier spacing and $100n$ kHz represents where the LTE-M carrier center is able to be placed, and where $m$ and $n$ are integers and $k$ is an NR subcarrier index.

The network devices may utilize the LTE-M carrier center positions in coexistence with NR bandwidth, as described above, when communicating with other devices or nodes. Examples of such network devices includes network nodes and wireless devices as described below.

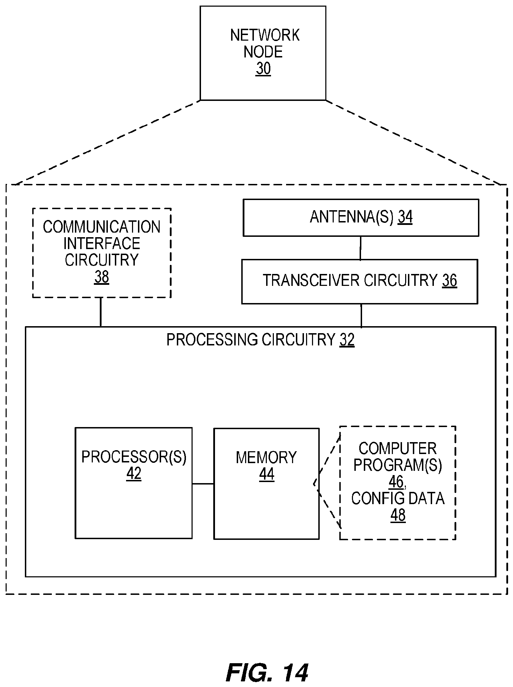

FIG. 14 shows an example network node 30 that may be configured to carry out one or more of these disclosed techniques. Network node 30 may be an evolved Node B (eNodeB), Node B or gNB. While a network node 30 is shown in FIG. 14, the operations can be performed by other kinds of network access nodes, including a radio network node such as base station, radio base station, base transceiver station, base station controller, network controller, NR BS, Multi-cell/multicast Coordination Entity (MCE), relay node, access point, radio access point, Remote Radio Unit (RRU), Remote Radio Head (RRH), or a multi-standard BS (MSR BS). Network node 30 may also, in some cases, be a core network node (e.g., MME, SON node, a coordinating node, positioning node, MDT node, etc.), or even an external node (e.g., 3rd party node, a node external to the current network), etc. Network node 30 may also comprise test equipment.

In the non-limiting embodiments described below, network node 30 will be described as being configured to operate as a cellular network access node in an LTE network or NR network. In some embodiments, the technique can be implemented in the RRC layer. The RRC layer could be implemented by one or more network nodes in a cloud environment and hence some embodiments can be implemented in a cloud environment.

Those skilled in the art will readily appreciate how each type of node may be adapted to carry out one or more of the methods and signaling processes described herein, e.g., through the modification of and/or addition of appropriate program instructions for execution by processing circuits 32.

Network node 30 facilitates communication between wireless terminals (e.g., UEs), other network access nodes and/or the core network. Network node 30 may include communication interface circuitry 38 that includes circuitry for communicating with other nodes in the core network, radio nodes, and/or other types of nodes in the network for the purposes of providing data and/or cellular communication services. Network node 30 communicates with wireless devices using antennas 34 and transceiver circuitry 36. Transceiver circuitry 36 may include transmitter circuits, receiver circuits, and associated control circuits that are collectively configured to transmit and receive signals according to a radio access technology, for the purposes of providing cellular communication services.

Network node 30 also includes one or more processing circuits 32 that are operatively associated with the transceiver circuitry 36 and, in some cases, the communication interface circuitry 38. Processing circuitry 32 comprises one or more digital processors 42, e.g., one or more microprocessors, microcontrollers, Digital Signal Processors (DSPs), Field Programmable Gate Arrays (FPGAs), Complex Programmable Logic Devices (CPLDs), Application Specific Integrated Circuits (ASICs), or any mix thereof. More generally, processing circuitry 32 may comprise fixed circuitry, or programmable circuitry that is specially configured via the execution of program instructions implementing the functionality taught herein, or some mix of fixed and programmed circuitry. Processor 42 may be multicore, i.e., having two or more processor cores utilized for enhanced performance, reduced power consumption, and more efficient simultaneous processing of multiple tasks.

Processing circuitry 32 also includes a memory 44. Memory 44, in some embodiments, stores one or more computer programs 46 and, optionally, configuration data 48. Memory 44 provides non-transitory storage for the computer program 46 and it may comprise one or more types of computer-readable media, such as disk storage, solid-state memory storage, or any mix thereof. Here, "non-transitory" means permanent, semipermanent, or at least temporarily persistent storage and encompasses both long-term storage in non-volatile memory and storage in working memory, e.g., for program execution. By way of non-limiting example, memory 44 comprises any one or more of SRAM, DRAM, EEPROM, and FLASH memory, which may be in processing circuitry 32 and/or separate from processing circuitry 32. Memory 44 may also store any configuration data 48 used by the network access node 30. Processing circuitry 32 may be configured, e.g., through the use of appropriate program code stored in memory 44, to carry out one or more of the methods and/or signaling processes detailed hereinafter.

Processing circuitry 32 of the network node 30 is configured, according to some embodiments, to perform the techniques described herein for one or more network nodes of a wireless communication system serving a plurality of UEs. Processing circuitry 32 is configured to transmit or receive using an LTE-M carrier within the bandwidth of an NR carrier with guard bands that are immediately adjacent to each end of the LTE-M carrier and that fit entirely within the NR bandwidth, where the center of the LTE-M carrier is aligned with an NR subcarrier on a 100 kHz NR raster grid, and where a maximum number of subcarriers in the LTE-M carrier align with subcarriers in NR. The center of the LTE-M carrier is located within the NR bandwidth such that at least one of: a minimum number of NR resource blocks are occupied by any part of the LTE-M carrier and the guard bands at each end, given a predetermined bandwidth for each of the guard bands; and given a predetermined number of NR resource blocks that can be occupied by any part of the LTE-M carrier and the guard bands at each end, a minimum guard band bandwidth from each end of the LTE-M carrier to the respective immediately adjacent NR resource block not occupied by any of part of the LTE-M carrier and the guard bands is maximized. Processing circuitry 32 is also configured to perform method 1300, according to some embodiments.

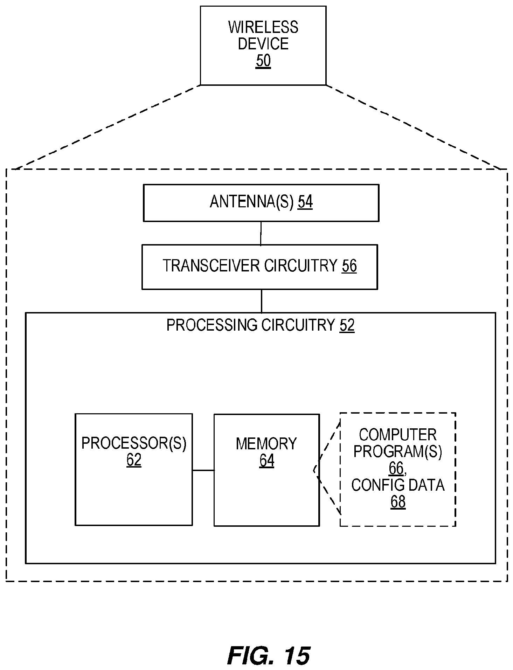

FIG. 15 illustrates a diagram of a wireless device 50 configured to carry out the techniques described above, according to some embodiments. Wireless device 50 may be considered to represent any wireless devices or terminals that may operate in a network, such as a UE in a cellular network. Other examples may include a communication device, target device, MTC device, IoT device, device to device (D2D) UE, machine type UE or UE capable of machine to machine communication (M2M), a sensor equipped with UE, PDA (personal digital assistant), tablet, IPAD tablet, mobile terminal, smart phone, laptop embedded equipped (LEE), laptop mounted equipment (LME), USB dongles, Customer Premises Equipment (CPE), etc.

Wireless device 50 is configured to communicate with a network node or base station in a wide-area cellular network via antennas 54 and transceiver circuitry 56. Transceiver circuitry 56 may include transmitter circuits, receiver circuits, and associated control circuits that are collectively configured to transmit and receive signals according to a radio access technology, for the purposes of using cellular communication services. This radio access technologies can be NR and LTE for the purposes of this discussion.

Wireless device 50 also includes one or more processing circuits 52 that are operatively associated with the radio transceiver circuitry 56. Processing circuitry 52 comprises one or more digital processing circuits, e.g., one or more microprocessors, microcontrollers, DSPs, FPGAs, CPLDs, ASICs, or any mix thereof. More generally, processing circuitry 52 may comprise fixed circuitry, or programmable circuitry that is specially adapted via the execution of program instructions implementing the functionality taught herein, or may comprise some mix of fixed and programmed circuitry. Processing circuitry 52 may be multicore.

Processing circuitry 52 also includes a memory 64. Memory 64, in some embodiments, stores one or more computer programs 66 and, optionally, configuration data 68. Memory 64 provides non-transitory storage for computer program 66 and it may comprise one or more types of computer-readable media, such as disk storage, solid-state memory storage, or any mix thereof. By way of non-limiting example, memory 64 comprises any one or more of SRAM, DRAM, EEPROM, and FLASH memory, which may be in processing circuitry 52 and/or separate from processing circuitry 52. Memory 64 may also store any configuration data 68 used by wireless device 50. Processing circuitry 52 may be configured, e.g., through the use of appropriate program code stored in memory 64, to carry out one or more of the methods and/or signaling processes detailed hereinafter.

Processing circuitry 52 of wireless device 50 is configured, according to some embodiments, to transmit or receive using an LTE-M carrier within the bandwidth of an NR carrier with guard bands that are immediately adjacent to each end of the LTE-M carrier and that fit entirely within the NR bandwidth, where the center of the LTE-M carrier is aligned with an NR subcarrier on a 100 kHz NR raster grid, and where a maximum number of subcarriers in the LTE-M carrier align with subcarriers in NR. The center of the LTE-M carrier is located within the NR bandwidth such that at least one of: a minimum number of NR resource blocks are occupied by any part of the LTE-M carrier and the guard bands at each end, given a predetermined bandwidth for each of the guard bands; and given a predetermined number of NR resource blocks that can be occupied by any part of the LTE-M carrier and the guard bands at each end, a minimum guard band bandwidth from each end of the LTE-M carrier to the respective immediately adjacent NR resource block not occupied by any of part of the LTE-M carrier and the guard bands is maximized. Processing circuitry 52 may also be configured to perform method 1300.

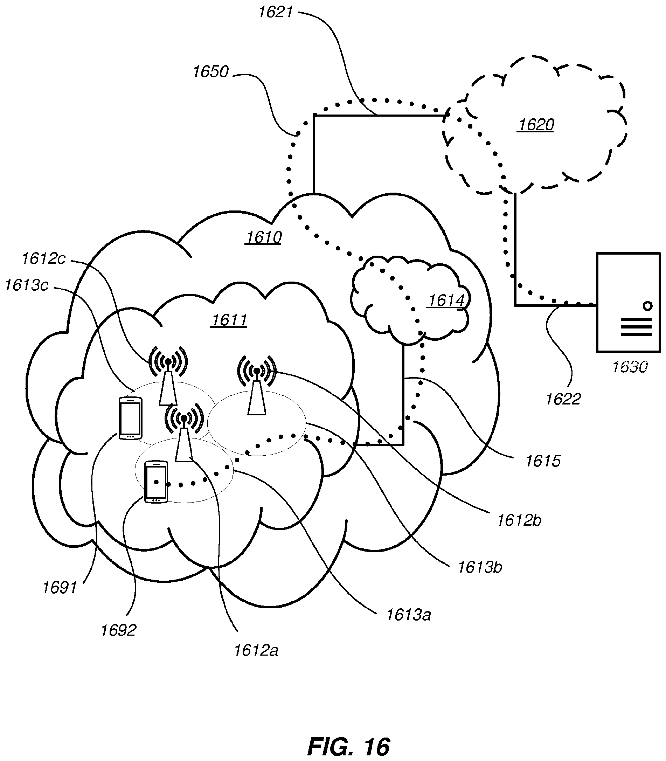

FIG. 16, according to some embodiments, illustrates a communication system that includes a telecommunication network 1610, such as a 3GPP-type cellular network, which comprises an access network 1611, such as a radio access network, and a core network 1614. The access network 1611 comprises a plurality of base stations 1612a, 1612b, 1612c, such as NBs, eNBs, gNBs or other types of wireless access points, each defining a corresponding coverage area 1613a, 1613b, 1613c. Each base station 1612a, 1612b, 1612c is connectable to the core network 1614 over a wired or wireless connection 1615. A first UE 16161 located in coverage area 1613c is configured to wirelessly connect to, or be paged by, the corresponding base station 1612c. A second UE 1692 in coverage area 1613a is wirelessly connectable to the corresponding base station 1612a. While a plurality of UEs 1691, 1692 are illustrated in this example, the disclosed embodiments are equally applicable to a situation where a sole UE is in the coverage area or where a sole UE is connecting to the corresponding base station 1612.

The telecommunication network 1610 is itself connected to a host computer 1630, which may be embodied in the hardware and/or software of a standalone server, a cloudimplemented server, a distributed server or as processing resources in a server farm. The host computer 1630 may be under the ownership or control of a service provider, or may be operated by the service provider or on behalf of the service provider. The connections 1621, 1622 between the telecommunication network 1610 and the host computer 1630 may extend directly from the core network 1614 to the host computer 1630 or may go via an optional intermediate network 1620. The intermediate network 1620 may be one of, or a combination of more than one of, a public, private or hosted network; the intermediate network 1620, if any, may be a backbone network or the Internet; in particular, the intermediate network 1620 may comprise two or more sub-networks (not shown).

The communication system of FIG. 16 as a whole enables connectivity between one of the connected UEs 1691, 1692 and the host computer 1630. The connectivity may be described as an over-the-top (OTT) connection 1650. The host computer 1630 and the connected UEs 1691, 1692 are configured to communicate data and/or signaling via the OTT connection 1650, using the access network 1611, the core network 1614, any intermediate network 1620 and possible further infrastructure (not shown) as intermediaries. The OTT connection 1650 may be transparent in the sense that the participating communication devices through which the OTT connection 1650 passes are unaware of routing of uplink and downlink communications. For example, a base station 1612 may not or need not be informed about the past routing of an incoming downlink communication with data originating from a host computer 1630 to be forwarded (e.g., handed over) to a connected UE 1691. Similarly, the base station 1612 need not be aware of the future routing of an outgoing uplink communication originating from the UE 1691 towards the host computer 1630.

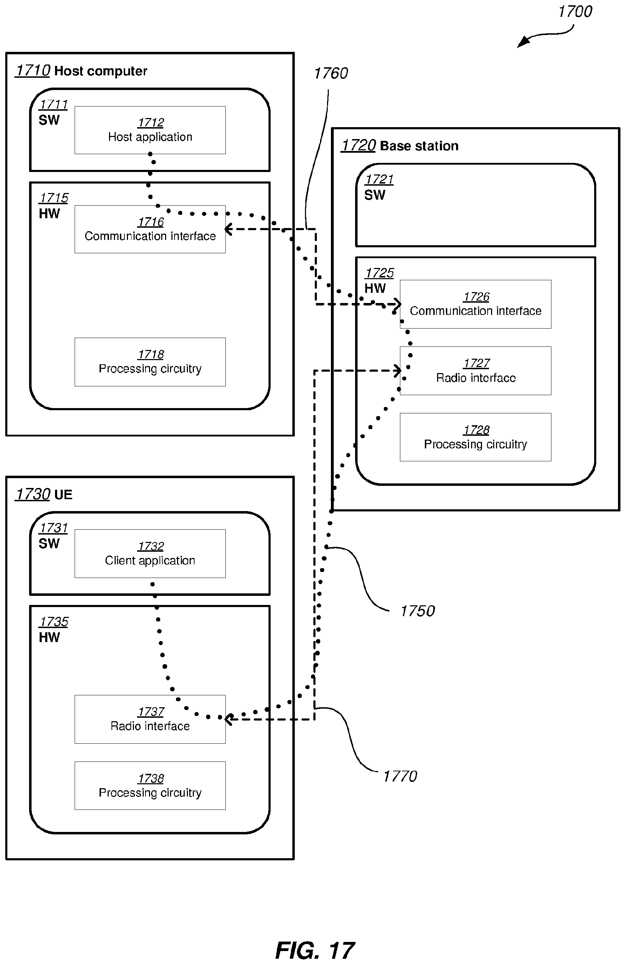

Example implementations, in accordance with an embodiment, of the UE, base station and host computer discussed in the preceding paragraphs will now be described with reference to FIG. 17. In a communication system 1700, a host computer 1710 comprises hardware 1715 including a communication interface 1716 configured to set up and maintain a wired or wireless connection with an interface of a different communication device of the communication system 1700. The host computer 1710 further comprises processing circuitry 1718, which may have storage and/or processing capabilities. In particular, the processing circuitry 1718 may comprise one or more programmable processors, application-specific integrated circuits, field programmable gate arrays or combinations of these (not shown) adapted to execute instructions. The host computer 1710 further comprises software 1711, which is stored in or accessible by the host computer 1710 and executable by the processing circuitry 1718. The software 1711 includes a host application 1712. The host application 1712 may be operable to provide a service to a remote user, such as a UE 1730 connecting via an OTT connection 1750 terminating at the UE 1730 and the host computer 1710. In providing the service to the remote user, the host application 1712 may provide user data which is transmitted using the OTT connection 1750.

The communication system 1700 further includes a base station 1720 provided in a telecommunication system and comprising hardware 1725 enabling it to communicate with the host computer 1710 and with the UE 1730. The hardware 1725 may include a communication interface 1726 for setting up and maintaining a wired or wireless connection with an interface of a different communication device of the communication system 1700, as well as a radio interface 1727 for setting up and maintaining at least a wireless connection 1770 with a UE 1730 located in a coverage area (not shown in FIG. 17) served by the base station 1720. The communication interface 1726 may be configured to facilitate a connection 1760 to the host computer 1710. The connection 1760 may be direct or it may pass through a core network (not shown in FIG. 17) of the telecommunication system and/or through one or more intermediate networks outside the telecommunication system. In the embodiment shown, the hardware 1725 of the base station 1720 further includes processing circuitry 1728, which may comprise one or more programmable processors, application-specific integrated circuits, field programmable gate arrays or combinations of these (not shown) adapted to execute instructions. The base station 1720 further has software 1721 stored internally or accessible via an external connection.

The communication system 1700 further includes the UE 1730 already referred to. Its hardware 1735 may include a radio interface 1737 configured to set up and maintain a wireless connection 1770 with a base station serving a coverage area in which the UE 1730 is currently located. The hardware 1735 of the UE 1730 further includes processing circuitry 1738, which may comprise one or more programmable processors, application-specific integrated circuits, field programmable gate arrays or combinations of these (not shown) adapted to execute instructions. The UE 1730 further comprises software 1731, which is stored in or accessible by the UE 1730 and executable by the processing circuitry 1738. The software 1731 includes a client application 1732. The client application 1732 may be operable to provide a service to a human or non-human user via the UE 1730, with the support of the host computer 1710. In the host computer 1710, an executing host application 1712 may communicate with the executing client application 1732 via the OTT connection 1750 terminating at the UE 1730 and the host computer 1710. In providing the service to the user, the client application 1732 may receive request data from the host application 1712 and provide user data in response to the request data. The OTT connection 1750 may transfer both the request data and the user data. The client application 1732 may interact with the user to generate the user data that it provides.

It is noted that the host computer 1710, base station 1720 and UE 1730 illustrated in FIG. 17 may be identical to the host computer 1630, one of the base stations 1612a, 1612b, 1612c and one of the UEs 1691, 1692 of FIG. 16, respectively. This is to say, the inner workings of these entities may be as shown in FIG. 17 and independently, the surrounding network topology may be that of FIG. 16.

In FIG. 17, the OTT connection 1750 has been drawn abstractly to illustrate the communication between the host computer 1710 and the use equipment 1730 via the base station 1720, without explicit reference to any intermediary devices and the precise routing of messages via these devices. Network infrastructure may determine the routing, which it may be configured to hide from the UE 1730 or from the service provider operating the host computer 1710, or both. While the OTT connection 1750 is active, the network infrastructure may further take decisions by which it dynamically changes the routing (e.g., on the basis of load balancing consideration or reconfiguration of the network).

The wireless connection 1770 between the UE 1730 and the base station 1720 is in accordance with the teachings of the embodiments described throughout this disclosure, such as provided by nodes such as wireless device 50 and network node 30, along with the corresponding method 1300. The embodiments described herein provide for the effective deployment of LTE-M in coexistence with NR. More specially, the embodiments address problems of subcarrier grid alignment and resource efficiency, which are the key issues in the coexistence of NR and LTE-M. The teachings of these embodiments may improve the data rate, capacity, latency and/or power consumption for the network and UE 1730 using the OTT connection 1750 for emergency warning systems and thereby provide benefits such as more efficient and targeted emergency messaging that saves on network and UE resources while improving the ability of users to take safe action.

A measurement procedure may be provided for the purpose of monitoring data rate, latency and other factors on which the one or more embodiments improve. There may further be an optional network functionality for reconfiguring the OTT connection 1750 between the host computer 1710 and UE 1730, in response to variations in the measurement results. The measurement procedure and/or the network functionality for reconfiguring the OTT connection 1750 may be implemented in the software 1711 of the host computer 1710 or in the software 1731 of the UE 1730, or both. In embodiments, sensors (not shown) may be deployed in or in association with communication devices through which the OTT connection 1750 passes; the sensors may participate in the measurement procedure by supplying values of the monitored quantities exemplified above, or supplying values of other physical quantities from which software 1711, 1731 may compute or estimate the monitored quantities. The reconfiguring of the OTT connection 1750 may include message format, retransmission settings, preferred routing etc.; the reconfiguring need not affect the base station 1720, and it may be unknown or imperceptible to the base station 1720. Such procedures and functionalities may be known and practiced in the art. In certain embodiments, measurements may involve proprietary UE signaling facilitating the host computer's 1710 measurements of throughput, propagation times, latency and the like. The measurements may be implemented in that the software 1711, 1731 causes messages to be transmitted, in particular empty or 'dummy' messages, using the OTT connection 1750 while it monitors propagation times, errors etc.

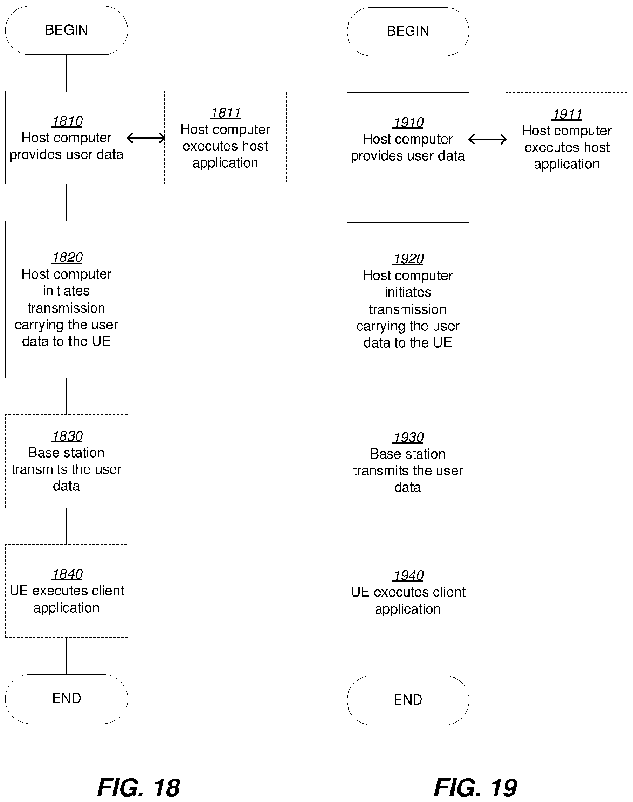

FIG. 18 is a flowchart illustrating a method implemented in a communication system, in accordance with one embodiment. The communication system includes a host computer, a base station and a UE which may be those described with reference to FIGS. 16 and 17. For simplicity of the present disclosure, only drawing references to FIG. 18 will be included in this section. In a first step 1810 of the method, the host computer provides user data. In an optional substep 1811 of the first step 1810, the host computer provides the user data by executing a host application. In a second step 1820, the host computer initiates a transmission carrying the user data to the UE. In an optional third step 1830, the base station transmits to the UE the user data which was carried in the transmission that the host computer initiated, in accordance with the teachings of the embodiments described throughout this disclosure. In an optional fourth step 1840, the UE executes a client application associated with the host application executed by the host computer.

FIG. 19 is a flowchart illustrating a method implemented in a communication system, in accordance with one embodiment. The communication system includes a host computer, a base station and a UE which may be those described with reference to FIGS. 16 and 17. For simplicity of the present disclosure, only drawing references to FIG. 19 will be included in this section. In a first step 1910 of the method, the host computer provides user data. In an optional substep (not shown) the host computer provides the user data by executing a host application. In a second step 1920, the host computer initiates a transmission carrying the user data to the UE. The transmission may pass via the base station, in accordance with the teachings of the embodiments described throughout this disclosure. In an optional third step 1930, the UE receives the user data carried in the transmission.

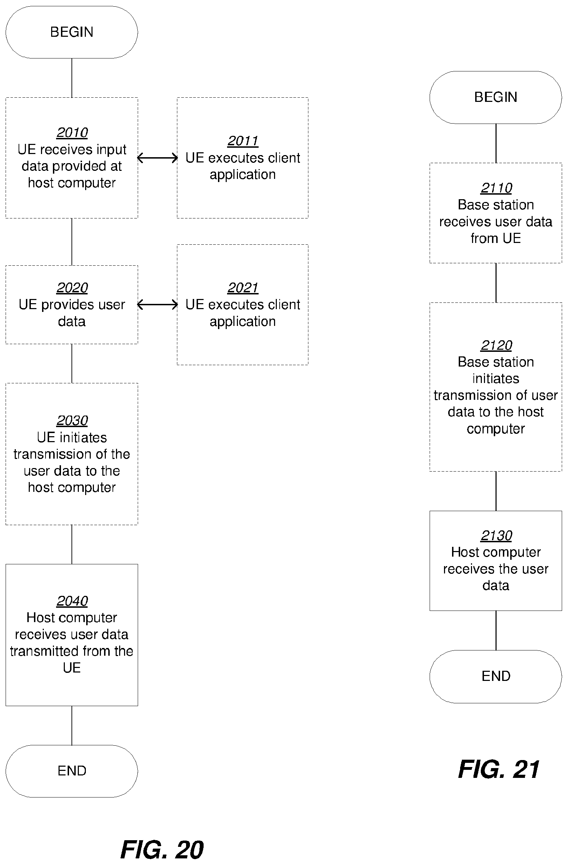

FIG. 20 is a flowchart illustrating a method implemented in a communication system, in accordance with one embodiment. The communication system includes a host computer, a base station and a UE which may be those described with reference to FIGS. 16 and 17. For simplicity of the present disclosure, only drawing references to FIG. 20 will be included in this section. In an optional first step 2010 of the method, the UE receives input data provided by the host computer. Additionally, or alternatively, in an optional second step 2020, the UE provides user data. In an optional substep 2021 of the second step 2020, the UE provides the user data by executing a client application. In a further optional substep 2011 of the first step 2010, the UE executes a client application which provides the user data in reaction to the received input data provided by the host computer. In providing the user data, the executed client application may further consider user input received from the user. Regardless of the specific manner in which the user data was provided, the UE initiates, in an optional third substep 2030, transmission of the user data to the host computer. In a fourth step 2040 of the method, the host computer receives the user data transmitted from the UE, in accordance with the teachings of the embodiments described throughout this disclosure.

FIG. 21 is a flowchart illustrating a method implemented in a communication system, in accordance with one embodiment. The communication system includes a host computer, a base station and a UE which may be those described with reference to FIGS. 16 and 17. For simplicity of the present disclosure, only drawing references to FIG. 21 will be included in this section. In an optional first step 2110 of the method, in accordance with the teachings of the embodiments described throughout this disclosure, the base station receives user data from the UE. In an optional second step 2120, the base station initiates transmission of the received user data to the host computer. In a third step 2130, the host computer receives the user data carried in the transmission initiated by the base station.

According to some embodiments, a communication system including a host computer comprises processing circuitry configured to provide user data and a communication interface configured to forward the user data to a cellular network for transmission to a UE, where the cellular network comprises a network node having a communication interface and processing circuitry, the network node's processing circuitry configured to perform any of the steps described above. The communication system may include the network node and/or the UE, wherein the UE is configured to communicate with the network node.

The processing circuitry of the host computer may be configured to execute a host application, thereby providing the user data, and the UE may comprise processing circuitry configured to execute a client application associated with the host application.

According to some embodiments, a method implemented in a communication system including a host computer, a network node and a UE includes, at the host computer, providing user data and at the host computer, initiating a transmission carrying the user data to the UE via a cellular network comprising the network node, wherein the network node performs any of the steps described above. The network node may transmit the user data. The user data may be provided at the host computer by executing a host application, the method further comprising, at the UE, executing a client application associated with the host application.

According to some embodiments, a communication system including a host computer comprises processing circuitry configured to provide user data and a communication interface configured to forward user data to a cellular network for transmission to a UE, where the UE comprises a radio interface and processing circuitry, the UE's components configured to perform any of the steps described above. The cellular network further may include a network node configured to communicate with the UE. The processing circuitry of the host computer may be configured to execute a host application, thereby providing the user data, and the UE's processing circuitry may be configured to execute a client application associated with the host application.

According to some embodiments, a method implemented in a communication system including a host computer, a network node and a UE, includes at the host computer, providing user data and at the host computer, initiating a transmission carrying the user data to the UE via a cellular network comprising the network node, wherein the UE performs any of the steps described above. The UE may receive the user data from the network node.

According to some embodiments, a communication system including a host computer comprises a communication interface configured to receive user data originating from a transmission from a UE to a base station, where the UE comprises a radio interface and processing circuitry, the UE's processing circuitry configured to perform any of the steps described above. The communication system may include the UE and/or the network node, where the network node may comprise a radio interface configured to communicate with the UE and a communication interface configured to forward to the host computer the user data carried by a transmission from the UE to the network node. The processing circuitry of the host computer may be configured to execute a host application, and the UE's processing circuitry may be configured to execute a client application associated with the host application, thereby providing the user data. The processing circuitry of the host computer may be configured to execute a host application, thereby providing request data, and the UE's processing circuitry may be configured to execute a client application associated with the host application, thereby providing the user data in response to the request data.

According to some embodiments, a method implemented in a communication system including a host computer, a network node and a UE, includes at the host computer, receiving user data transmitted to the network node from the UE, wherein the UE performs any of the steps described above. The UE may provide the user data to the network node and/or execute a client application, thereby providing the user data to be transmitted. The host computer may execute a host application associated with the client application. The UE may execute a client application and/or receive input data to the client application, the input data being provided at the host computer by executing a host application associated with the client application, where the user data to be transmitted is provided by the client application in response to the input data.

According to some embodiments, a communication system including a host computer comprising a communication interface configured to receive user data originating from a transmission from a UE to a network node, where the network node comprises a radio interface and processing circuitry, the network node's processing circuitry configured to perform any of the steps of described above. The communication system may include the network node and/or the UE, where the UE may be configured to communicate with the network node. The processing circuitry of the host computer may be configured to execute a host application, and the UE may be configured to execute a client application associated with the host application, thereby providing the user data to be received by the host computer.

According to some embodiments, a method implemented in a communication system including a host computer, a network node and a UE, includes at the host computer, receiving, from the base station, user data originating from a transmission which the network node has received from the UE, wherein the UE performs any of the steps described above. The network node may receive the user data from the UE and/or initiate a transmission of the received user data to the host computer.

As discussed in detail above, the techniques described herein, e.g., as illustrated in the process flow diagram of FIG. 13, may be implemented, in whole or in part, using computer program instructions executed by one or more processors. It will be appreciated that a functional implementation of these techniques may be represented in terms of functional modules, where each functional module corresponds to a functional unit of software executing in an appropriate processor or to a functional digital hardware circuit, or some combination of both.

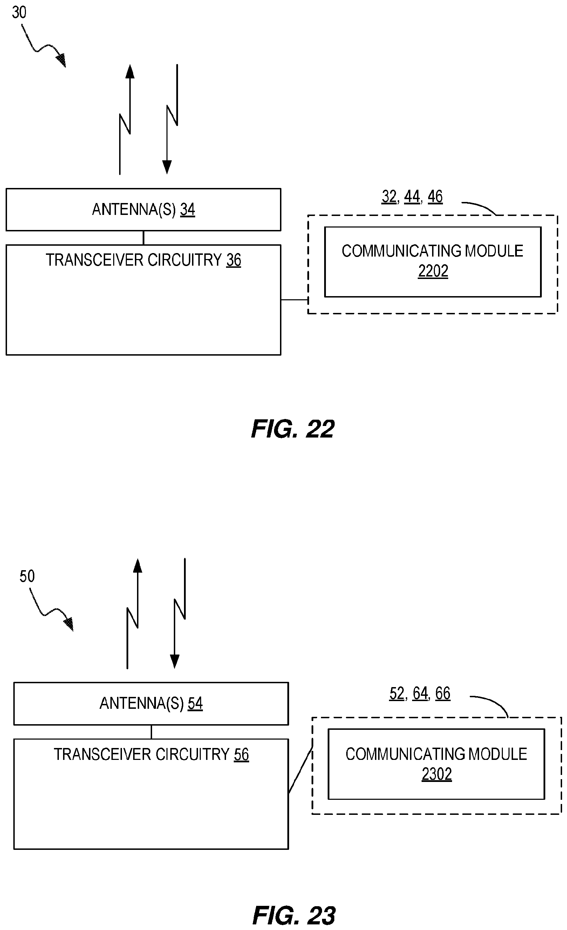

FIG. 22 illustrates an example functional module or circuit architecture for a network node, such as network node 30. The functional implementation includes a communicating module 2202 transmitting or receiving using an LTE-M carrier within the bandwidth of an NR carrier with guard bands that are immediately adjacent to each end of the LTE-M carrier and that fit entirely within the NR bandwidth, where the center of the LTE-M carrier is aligned with an NR subcarrier on a 100 kHz NR raster grid, and where a maximum number of subcarriers in the LTE-M carrier align with subcarriers in NR. The center of the LTE-M carrier is located within the NR bandwidth such that at least one of: a minimum number of NR resource blocks are occupied by any part of the LTE-M carrier and the guard bands at each end, given a predetermined bandwidth for each of the guard bands; and given a predetermined number of NR resource blocks that can be occupied by any part of the LTE-M carrier and the guard bands at each end, a minimum guard band bandwidth from each end of the LTE-M carrier to the respective immediately adjacent NR resource block not occupied by any of part of the LTE-M carrier and the guard bands is maximized..

FIG. 23 illustrates an example functional module or circuit architecture for wireless device 50 that includes a communicating module 2302 for transmitting or receiving using an LTE-M carrier within the bandwidth of an NR carrier with guard bands that are immediately adjacent to each end of the LTE-M carrier and that fit entirely within the NR bandwidth, where the center of the LTE-M carrier is aligned with an NR subcarrier on a 100 kHz NR raster grid, and where a maximum number of subcarriers in the LTE-M carrier align with subcarriers in NR. The center of the LTE-M carrier is located within the NR bandwidth such that at least one of: a minimum number of NR resource blocks are occupied by any part of the LTE-M carrier and the guard bands at each end, given a predetermined bandwidth for each of the guard bands; and given a predetermined number of NR resource blocks that can be occupied by any part of the LTE-M carrier and the guard bands at each end, a minimum guard band bandwidth from each end of the LTE-M carrier to the respective immediately adjacent NR resource block not occupied by any of part of the LTE-M carrier and the guard bands is maximized.

Many variations and modifications can be made to the embodiments without departing from the scope of the appended claims Accordingly, the above disclosed subject matter is to be considered illustrative, and not restrictive, and the examples of embodiments are intended to cover all such modifications, enhancements, and other embodiments, which fall within the scope of the appended claims. Thus, to the maximum extent allowed by law, the scope of present inventive concepts is to be determined by the broadest permissible interpretation of the appended claims, and shall not be restricted or limited by the foregoing detailed description.

**Claims**

1. A network device (30, 50), comprising:

   transceiver circuitry (36, 56); and
   processing circuitry (32, 52) operatively associated with the transceiver circuitry and configured to:

   transmit or receive, via the transceiver circuitry, using a Long Term Evolution - Machine Type Communication, LTE-M, carrier within the bandwidth of a New Radio, NR, carrier with guard bands that are immediately adjacent to each end of the LTE-M carrier and that fit entirely within the NR bandwidth,
   wherein the center of the LTE-M carrier is aligned with an NR subcarrier on a 100 kHz NR raster grid, and
   wherein a maximum number of subcarriers in the LTE-M carrier align with subcarriers in NR,
   wherein the center of the LTE-M carrier is located within the NR bandwidth such that at least one of:

   a minimum number of NR resource blocks are occupied by any part of the LTE-M carrier and the guard bands at each end, given a predetermined bandwidth for each of the guard bands; and
   given a predetermined number of NR resource blocks that can be occupied by any part of the LTE-M carrier and the guard bands at each end, a minimum guard band bandwidth from each end of the LTE-M carrier to the respective immediately adjacent NR resource block not occupied by any of part of the LTE-M carrier and the guard bands is maximized.

2. The network device of claim 1 (30, 50), wherein the center of the LTE-M carrier is positioned relative to an NR raster, considering 100 kHz guard band and 30 kHz NR subcarrier spacing, according to any offset position in the following table:

| NR bandwidth (MHz) | Offset positions of the LTE-M carrier center, in number of NR subcarriers relative to the NR raster |
|---|---|
| 10 | -120 -110 -60 -50 0 10 60 70 120 130 |
| 15 | -180 -170 -120 -110 -60 -50 0 10 60 70 120 130 180 190 |
| 20 | -290 -240 -230 -180 -170 -120 -110 -60 -50 0 10 60 70 120 130 180 190 240 250 300 |
| 25 | -360 -350 -300 -290 -240 -230 -180 -170 -120 -110 -60 -50 0 10 60 70 120 130 180 190 240 250 300 310 360 370 |
| 30 | -420 -410 -360 -350 -300 -290 -240 -230 -180 -170 -120 -110 -60 -50 0 10 60 70 120 130 180 190 240 250 300 310 360 370 420 430 |
| 40 | -600 -590 -540 -530 -480 -470 -420 -410 -360 -350 -300 -290 -240 -230 -180 -170 -120 -110 -60 -50 0 10 60 70 120 130 180 190 240 250 300 310 360 370 420 430 480 490 540 550 600 610 |
| 50 | -780 -770 -720 -710 -660 -650 -600 -590 -540 -530 -480 -470 -420 -410 -360 -350 -300 -290 -240 -230 -180 -170 -120 -110 -60 -50 0 10 60 70 120 130 180 190 240 250 300 310 360 370 420 430 480 490 540 550 600 610 660 670 720 730 780 790 |
| 60 | -950 -900 -890 -840 -830 -780 -770 -720 -710 -660 -650 -600 -590 -540 -530 -480 -470 -420 -410 -360 -350 -300 -290 -240 -230 -180 -170 -120 -110 -60 -50 0 10 60 70 120 130 180 190 240 250 300 310 360 370 420 430 480 490 540 550 600 610 660 670 720 730 780 790 840 850 900 910 960 970 |
| 80 | -1260 -1250 -1200 -1190 -1140 -1130 -1080 -1070 -1020 -1010 -960 -950 -900 -890 -840 -830 -780 -770 -720 -710 -660 -650 -600 -590 -540 -530 -480 -470 -420 -410 -360 -350 -300 -290 -240 -230 -180 -170 -120 -110 -60 -50 0 10 60 70 120 130 180 190 240 250 300 310 360 370 420 430 480 490 540 550 600 610 660 670 720 730 780 790 840 850 900 910 960 970 1020 1030 1080 1090 1140 1150 1200 1210 1260 1270 |

(continued)

| NR bandwidth (MHz) | Offset positions of the LTE-M carrier center, in number of NR subcarriers relative to the NR raster |
|---|---|
| 100 | -1620 -1610 -1560 -1550 -1500 -1490 -1440 -1430 -1380 -1370 -1320 -1310 -1260 -1250 1200 -1190 -1140 -1130 -1080 -1070 -1020 -1010 -960 -950 -900 -890 -840 -830 -780 -770 -720 -710 -660 -650 -600 -590 -540 -530 -480 -470 -420 -410 -360 -350 -300 -290 -240 -230 -180 -170 -120 -110 -60 -50 0 10 60 70 120 130 180 190 240 250 300 310 360 370 420 430 480 490 540 550 600 610 660 670 720 730 780 790 840 850 900 910 960 970 1020 1030 1080 1090 1140 1150 1200 1210 1260 1270 1320 1330 1380 1390 1440 1450 1500 1510 1560 1570 1620 1630 |

or wherein the center of the LTE-M carrier is positioned relative to an NR raster, considering 100 kHz guard band and 30 kHz NR subcarrier spacing, according to any offset position in the following table:

| NR bandwidth (MHz) | Offset positions of the LTE-M carrier center, in number of NR subcarriers relative to the NR raster |
|---|---|
| 10 | n30 for even integers n from -4 to 4; and -20+n30 for odd integers n from -3 to 5 |
| 15 | n30 for even integers n from -6 to 6; and -20+n30 for odd integers n from -5 to 7 |
| 20 | n30 for even integers n from -8 to 10; and -20+n30 for odd integers n from -9 to 9 |
| 25 | n30 for even integers n from -12 to 12; and -20+n30 for odd integers n from -11 to 13 |
| 30 | n30 for even integers n from -14 to 14; and -20+n30 for odd integers n from -13 to 15 |
| 40 | n30 for even integers n from -20 to 20; and -20+n30 for odd integers n from -19 to 21 |
| 50 | n30 for even integers n from -26 to 26; and -20+n30 for odd integers n from -25 to 27 |
| 60 | n30 for even integers n from -30 to 31; and -20+n30 for odd integers n from -31 to 33 |
| 80 | n30 for even integers n from -42 to 42; and -20+n30 for odd integers n from -41 to 43 |
| 100 | n30 for even integers n from -54 to 54; and -20+n30 for odd integers n from -53 to 55 |

or wherein the center of the LTE-M carrier is positioned relative to an NR raster, considering 300 kHz guard band and 30 kHz NR subcarrier spacing, according to any offset position in the following table:

| NR bandwidth (MHz) | Offset positions of the LTE-M carrier center, in number of NR subcarriers relative to the NR raster |
|---|---|
| 10 | -90 -80 -30 -20 30 40 90 100 |
| 15 | -200 -150 -140 -90 -80 -30 -20 30 40 90 100 150 160 210 220 |
| 20 | -270 -260 -210 -200 -150 -140 -90 -80 -30 -20 30 40 90 100 150 160 210 220 270 280 |
| 25 | -330 -320 -270 -260 -210 -200 -150 -140 -90 -80 -30 -20 30 40 90 100 150 160 210 220 270 280 330 340 |
| 30 | -440 -390 -380 -330 -320 -270 -260 -210 -200 -150 -140 -90 -80 -30 -20 30 40 90 100 150 160 210 220 270 280 330 340 390 400 450 460 |
| 40 | -570 -560 -510 -500 -450 -440 -390 -380 -330 -320 -270 -260 -210 -200 -150 -140 -90 -80 -30 -20 30 40 90 100 150 160 210 220 270 280 330 340 390 400 450 460 510 520 570 580 630 |
| 50 | -750 -740 -690 -680 -630 -620 -570 -560 -510 -500 -450 -440 -390 -380 -330 -320 -270 -260 -210 -200 -150 -140 -90 -80 -30 -20 30 40 90 100 150 160 210 220 270 280 330 340 390 400 450 460 510 520 570 580 630 640 690 700 750 760 |

(continued)

| NR bandwidth (MHz) | Offset positions of the LTE-M carrier center, in number of NR subcarriers relative to the NR raster |
|---|---|
| 60 | -930 -920 -870 -860 -810 -800 -750 -740 -690 -680 -630 -620 -570 -560 -510 -500 -450 -440 -390 -380 -330 -320 -270 -260 -210 -200 -150 -140 -90 -80 -30 -20 30 40 90 100 150 160 210 220 270 280 330 340 390 400 450 460 510 520 570 580 630 640 690 700 750 760 810 820 870 880 930 940 |
| 80 | -1280 -1230 -1220 -1170 -1160 -1110 -1100 -1050 -1040 -990 -980 -930 -920 -870 -860 -810 -800 -750 -740 -690 -680 -630 -620 -570 -560 -510 -500 -450 -440 -390 -380 -330 -320 -270 -260 -210 -200 -150 -140 -90 -80 -30 -20 30 40 90 100 150 160 210 220 270 280 330 340 390 400 450 460 510 520 570 580 630 640 690 700 750 760 810 820 870 880 930 940 990 1000 1050 1060 1110 1120 1170 1180 1230 1240 1290 1300 |
| 100 | -1590 -1580 -1530 -1520 -1470 -1460 -1410 -1400 -1350 -1340 -1290 -1280 -1230 -1220 -1170 -1160 -1110 -1100 -1050 -1040 -990 -980 -930 -920 -870 -860 -810 -800 -750 -740 -690 -680 -630 -620 -570 -560 -510 -500 -450 -440 -390 -380 -330 -320 -270 -260 -210 -200 -150 -140 -90 -80 -30 -20 30 40 90 100 150 160 210 220 270 280 330 340 390 |
| | 400 450 460 510 520 570 580 630 640 690 700 750 760 810 820 870 880 930 940 990 1000 1050 1060 1110 1120 1170 1180 1230 1240 1290 1300 1350 1360 1410 1420 1470 1480 1530 1540 1590 1600 |

or wherein the center of the LTE-M carrier is positioned relative to an NR raster, considering 300 kHz guard band and 30 kHz NR subcarrier spacing, according to any offset position in the following table:

| NR bandwidth (MHz) | Offset positions of the LTE-M carrier center, in number of NR subcarriers relative to the NR raster |
|---|---|
| 10 | -20+n60 for integers n from -1 to 2; and<br>-30+n60 for integers n from -1 to 2 |
| 15 | -20+n60 for integers n from -3 to 4; and<br>-30+n60 for integers n from -2 to 4 |
| 20 | -20+n60 for integers n from -4 to 5; and<br>-30+n60 for integers n from -4 to 5 |
| 25 | -20+n60 for integers n from -5 to 6; and<br>-30+n60 for integers n from -5 to 6 |
| 30 | -20+n60 for integers n from -7 to 8; and<br>-30+n60 for integers n from -6 to 8 |
| 40 | -20+n60 for integers n from -9 to 10; and<br>-30+n60 for integers n from -9 to 11 |
| 50 | -20+n60 for integers n from -12 to 13; and<br>-30+n60 for integers n from -12 to 13 |
| 60 | -20+n60 for integers n from -15 to 16; and<br>-30+n60 for integers n from -15 to 16 |
| 80 | -20+n60 for integers n from -21 to 22; and<br>-30+n60 for integers n from -20 to 22 |
| 100 | -20+n60 for integers n from -26 to 27; and<br>-30+n60 for integers n from -26 to 27 |

or wherein the center of the LTE-M carrier is positioned relative to an NR raster, considering 4 NR resource blocks and 30 kHz NR subcarrier spacing, according to any offset position in the following table:

| NR bandwidth (MHz) | Offset positions of the LTE-M carrier center, in number of NR subcarriers relative to the NR raster |
|---|---|
| 10 | -120 -60 0 60 120 |
| 15 | -180 -120 -60 0 60 120 180 |
| 20 | -270 -210 -150 -90 -30 30 90 150 210 270 |
| 25 | -390 -330 -270 -210 -150 -90 -30 30 90 150 210 270 330 |
| 30 | -420 -360 -300 -240 -180 -120 -60 0 60 120 180 240 300 360 420 |
| 40 | -600 -540 -480 -420 -360 -300 -240 -180 -120 -60 0 60 120 180 240 300 360 420 480 540 600 |
| 50 | -750 -690 -630 -570 -510 -450 -390 -330 -270 -210 -150 -90 -30 30 90 150 210 270 330 390 450 510 570 630 690 750 |
| 60 | -960 -900 -840 -780 -720 -660 -600 -540 -480 -420 -360 -300 -240 -180 -120 -60 0 60 120 180 240 300 360 420 480 540 600 660 720 780 840 900 960 |
| 80 | -1290 -1230 -1170 -1110 -1050 -990 -930 -870 -810 -750 -690 -630 -570 -510 -450 -390 -330 -270 -210 -150 -90 -30 30 90 150 210 270 330 390 450 510 570 630 690 750 810 870 930 990 1050 1110 1170 1230 1290 |
| 100 | -1590 -1530 -1470 -1410 -1350 -1290 -1230 -1170 -1110 -1050 -990 -930 -870 -810 -750 -690 -630 -570 -510 -450 -390 -330 -270 -210 -150 -90 -30 30 90 150 210 270 330 390 450 510 570 630 690 750 810 870 930 |
| | 990 1050 1110 1170 1230 1290 1350 1410 1470 1530 1590 |

or wherein the center of the LTE-M carrier is positioned relative to an NR raster, considering 4 NR resource blocks and 30 kHz NR subcarrier spacing, according to any offset position in the following table:

| NR bandwidth (MHz) | Offset positions of the LTE-M carrier center, in number of NR subcarriers relative to the NR raster |
|---|---|
| 10 | n60 where n is integer from -2 to 2 |
| 15 | n60 where n is integer from -3 to 3 |
| 20 | -30+n60 where n is integer from -4 to 5 |
| 25 | -30+n60 where n is integer from -6 to 6 |
| 30 | n60 where n is integer from -7 to 7 |
| 40 | n60 where n is integer from -10 to 10 |
| 50 | -30+n60 where n is integer from -12 to 13 |
| 60 | n60 where n is integer from -16 to 16 |
| 80 | -30+n60 where n is integer from -21 to 22 |
| 100 | -30+n60 where n is integer from -26 to 27 |
| ; | |

or wherein the center of the LTE-M carrier is positioned relative to an NR raster, considering 5 NR resource blocks and 30 kHz NR subcarrier spacing, according to any offset position in the following table:

| NR bandwidth (MHz) | Offset positions of the LTE-M carrier center, in number of NR subcarriers relative to the NR raster |
|---|---|
| 10 | -140 -80 -20 40 100 |
| 15 | -200 -140 -80 -20 40 100 160 220 |

(continued)

| NR bandwidth (MHz) | Offset positions of the LTE-M carrier center, in number of NR subcarriers relative to the NR raster |
|---|---|
| 20 | -290 -230 -170 -110 -50 10 70 130 190 250 |
| 25 | -350 -290 -230 -170 -110 -50 10 70 130 190 250 310 370 |
| 30 | -440 -380 -320 -260 -200 -140 -80 -20 40 100 160 220 280 340 400 460 |
| 40 | -620 -560 -500 -440 -380 -320 -260 -200 -140 -80 -20 40 100 160 220 280 340 400 460 520 580 |
| 50 | -770 -710 -650 -590 -530 -470 -410 -350 -290 -230 -170 -110 -50 10 70 130 190 250 310 370 430 490 550 610 670 730 790 |
| 60 | -920 -860 -800 -740 -680 -620 -560 -500 -440 -380 -320 -260 -200 -140 -80 -20 40 100 160 220 280 340 400 460 520 580 640 700 760 820 880 940 |
| 80 | -1250 -1190 -1130 -1070 -1010 -950 -890 -830 -770 -710 -650 -590 -530 -470 -410 -350 -290 -230 -170 -110 -50 10 70 130 190 250 310 370 430 490 550 610 670 730 790 850 910 970 1030 1090 1150 1210 1270 |
| 100 | -1610 -1550 -1490 -1430 -1370 -1310 -1250 -1190 -1130 -1070 -1010 -950 -890 -830 -770 -710 -650 -590 -530 -470 -410 -350 -290 -230 -170 -110 -50 10 70 130 190 250 310 370 430 490 550 610 670 730 790 850 910 970 1030 1090 1150 1210 1270 1330 1390 1450 1510 1570 1630 |

; or wherein the center of the LTE-M carrier is positioned relative to an NR raster, considering 5 NR resource blocks and 30 kHz NR subcarrier spacing, according to any offset position in the following table:

| NR bandwidth (MHz) | Offset positions of the LTE-M carrier center, in number of NR subcarriers relative to the NR raster |
|---|---|
| 10 | -20+n60 where n is integer from -2 to 2 |
| 15 | -20+n60 where n is integer from -3 to 4 |
| 20 | -50+n60 where n is integer from -4 to 5 |
| 25 | -50+n60 where n is integer from -5 to 7 |
| 30 | -20+n60 where n is integer from -7 to 8 |
| 40 | -20+n60 where n is integer from -10 to 10 |
| 50 | -50+n60 where n is integer from -12 to 14 |
| 60 | -20+n60 where n is integer from -15 to 16 |
| 80 | -50+n60 where n is integer from -20 to 22 |
| 100 | -50+n60 where n is integer from -26 to 28 |

3. The network device (30, 50) of claim 1, wherein the center of the LTE-M carrier is located at an NR subcarrier index $k^*$ relative to an NR raster, where $k^*$ is in a set $k^*=10q$, where q is an integer,

wherein $k^*$ is in the range:

$$\frac{B_L/2+G-B_{nr}/2-15}{N_S} \leq k^* \leq \frac{B_{nr}/2-B_L/2-G-15}{N_S},$$

where $N_S$ is NR subcarrier spacing, $B_L$ is operational bandwidth for LTE-M, $B_{nr}$ is the NR bandwidth and G represents bandwidth of the guard bands for the LTE-M carrier,
wherein the LTE-M carrier center is positioned at $k^*$ according to one of the following equations, where $N_{RB}$ is the number of NR resource blocks, RBs:

$$\frac{(12N_S)L + B_L/2 + G - 15}{N_S} \le k^* \le \frac{(12N_S)(L + N_{RB}) - B_L/2 - G - 15}{N_S}$$

for an even number of NR resource blocks, where $L$ is an integer and $(-N_{RB}/2 + 1) \le L \le N_{RB}/2$; and

$$\frac{(12N_S)L + B_L/2 + G - 15 - (12N_S/2)}{N_S} \le k^*$$

$$\le \frac{(12N_S)(L + N_{RB}) - B_L/2 - G - 15 - (12N_S/2)}{N_S}$$

for an odd number of NR resource blocks, where $L$ is an integer and $-(N_{RB} - 1)/2 \le L \le (N_{RB} - 1)/2$.

4. The network device (30, 50) of claim 3, wherein the minimum number $N$ of NR resource blocks needed for the LTE-M carrier is:

$$N = \left\lceil \frac{B_L + 2G}{(12N_S)} \right\rceil$$

where $\lceil \cdot \rceil$ is a ceiling function.

5. The network device (30, 50) of claim 3,

wherein a minimum frequency $F_{nr,min} = -15 + (12N_S)L$ and a maximum frequency $F_{nr,max} = -15 + (12N_S)(L + N_{RB})$ for an even number of NR resource blocks, a minimum frequency $F_{nr,min} = -15 - (12N_S/2) + (12N_S)L$ and a maximum frequency $F_{nr,max} = -15 - (12N_S/2) + (12N_S)(L + N_{RB})$ for an odd number of NR resource blocks, and wherein the maximum guard band bandwidth at left (lower frequency) and right (higher frequency) sides of the LTE-M carrier are $G_{right} = F_{nr,max} - (F_{LTEM} + B_L/2)$ and $G_{left} = (F_{LTEM} - B_L/2) - F_{nr,min}$, where $F_{LTEM}$ is the LTE-M carrier center.

6. The network device (30, 50) of claim 5, wherein $L$ is:

$$L = \left\lfloor \frac{(F_{LTEM} - B_L/2) + 15}{(12N_S)} \right\rfloor$$

where $\lfloor \cdot \rfloor$ is the floor function, and
wherein the LTE-M carrier center $F_{LTEM}$ is in a position in the range of k* where $L$ maximizes the $G_{left}$ and the $G_{right}$.

7. The network device (30, 50) of claim 1, wherein NR and LTE-M subcarrier alignment occurs according to the equation: $100n = 100m + 30k$, where $100m$ kHz represents the possible frequencies of an NR raster, considering 30 kHz NR subcarrier spacing, and $100n$ kHz represents where the LTE-M carrier center is able to be placed, where $m$ and $n$ are integers and $k$ is an NR subcarrier index.

8. The network device (30, 50) of claim 1, wherein an NR raster is located at subcarrier #0 in a resource block with index $N_{RB}/2$ for an even number of resource blocks, wherein the NR raster is located at subcarrier #6 in a resource block with index $(N_{RB}-1)/2$ for an odd number of resource blocks, wherein $N_{RB}$ is the number of resource blocks, and wherein subcarrier #0 corresponds to the lowest subcarrier in frequency in a resource block and subcarrier index #11 corresponds to the highest subcarrier in frequency in a resource block.

9. The network device (30, 50) of claim 1, wherein the network device is a wireless device (50) or a radio network node (30).

10. The network device (30, 50) of claim 1, wherein the processing circuitry (32, 52) is configured to generate a signal and transmit the generated signal on the LTE-M carrier within the bandwidth of the NR carrier.

11. The network device (30, 50) of claim 1, wherein the processing circuitry (32, 52) is configured to receive a signal on the LTE-M carrier within the bandwidth of the NR carrier and process the received signal.

12. The network device (30, 50) of claim 11, wherein the processing circuitry (32, 52) is configured to search for the LTE-M carrier within the bandwidth of the NR carrier according to an NR raster.

13. A method (1300) for communicating in a wireless communication network, comprising:

transmitting or receiving (1304), via the transceiver circuitry, using a Long Term Evolution - Machine Type Communication, LTE-M, carrier within the bandwidth of a New Radio, NR, carrier with guard bands that are immediately adjacent to each end of the LTE-M carrier and that fit entirely within the NR bandwidth, wherein the center of the LTE-M carrier is aligned with an NR subcarrier on a 100kHz NR raster grid, and wherein a maximum number of subcarriers in the LTE-M carrier align with subcarriers in NR, wherein the center of the LTE-M carrier is located within the NR bandwidth such that at least one of:

a minimum number of NR resource blocks are occupied by any part of the LTE-M carrier and the guard bands at each end, given a predetermined bandwidth for each of the guard bands; and given a predetermined number of NR resource blocks that can be occupied by any part of the LTE-M carrier and the guard bands at each end, a minimum guard band bandwidth from each end of the LTE-M carrier to the respective immediately adjacent NR resource block not occupied by any of part of the LTE-M carrier and the guard bands at each end is maximized.

14. The method (1300) of claim 13, wherein the method further comprises generating (1302) a signal and the transmitting or receiving comprises transmitting the generated signal on the LTE-M carrier within the bandwidth of the NR carrier.

15. The method (1300) of claim 13, wherein the transmitting or receiving comprises receiving a signal on the LTE-M carrier within the bandwidth of the NR carrier and wherein the method further comprises processing (1306) the received signal.

**Patentansprüche**

1. Netzvorrichtung (30, 50), umfassend:

eine Sendeempfängerschaltung (36, 56); und eine Verarbeitungsschaltung (32, 52), die der Sendeempfängerschaltung funktionell zugeordnet ist und zu Folgendem ausgelegt ist:

Übertragen oder Empfangen, über die Sendeempfängerschaltung, unter Verwendung eines Trägers zur maschinellen Kommunikation über Long Term Evolution, LTE-M, innerhalb der Bandbreite eines New-Radio-Trägers, NR-Trägers, mit Schutzbändern, die sich unmittelbar benachbart zu jedem Ende des LTE-M-Trägers befinden und die vollständig in die NR-Bandbreite passen, wobei die Mitte des LTE-M-Trägers an einem NR-Unterträger auf einem 100-kHz-NR-Rastergitter ausgerichtet ist und wobei eine maximale Anzahl von Unterträgern in dem LTE-M-Träger an Unterträgern in NR ausgerichtet ist, wobei sich die Mitte des LTE-M-Trägers innerhalb der NR-Bandbreite derart befindet, dass mindestens eines von Folgendem gilt:

bei einer vorbestimmten Bandbreite für jedes der Schutzbänder ist eine minimale Anzahl von NR-Ressourcenblöcken durch einen beliebigen Teil des LTE-M-Trägers und die Schutzbänder an jedem Ende belegt; und bei einer vorbestimmten Anzahl von NR-Ressourcenblöcken, die durch einen beliebigen Teil des LTE-M-Trägers und die Schutzbänder an jedem Ende belegt sein können, wird eine minimale Schutzbandbandbreite von jedem Ende des LTE-M-Trägers zu dem jeweiligen unmittelbar benachbarten NR-Ressourcenblock, der nicht durch einen beliebigen Teil des LTE-M-Trägers und die Schutzbänder belegt ist, maximiert.

**2.** Netzvorrichtung nach Anspruch 1 (30, 50), wobei die Mitte des LTE-M-Trägers unter Berücksichtigung eines 100-kHz-Schutzbands und eines 30-kHz-NR-Unterträgerabstands im Verhältnis zu einem NR-Raster gemäß einer beliebigen Versatzposition in der folgenden Tabelle positioniert ist:

| NR-Bandbreite (MHz) | Versatzpositionen der Mitte des LTE-M-Trägers in Anzahl von NR-Unterträgern im Verhältnis zu dem NR-Raster |
|---|---|
| 10 | -120 -110 -60 -50 0 10 60 70 120 130 |
| 15 | -180 -170 -120 -110 -60 -50 0 10 60 70 120 130 180 190 |
| 20 | -290 -240 -230 -180 -170 -120 -110 - 60 -50 0 10 60 70 120 130 180 190 240 250 300 |
| 25 | -360 -350 -300 -290 -240 -230 -180 - 170 -120 -110 -60 -50 0 10 60 70 120 130 180 190 240 250 300 310 360 370 |
| 30 | -420 -410 -360 -350 -300 -290 -240 - 230 -180 -170 -120 -110 -60 -50 0 10 60 70 120 130 180 190 240 250 300 310 360 370 420 430 |
| 40 | -600 -590 -540 -530 -480 -470 -420 - 410 -360 -350 -300 -290 -240 -230 -180 -170 -120 -110 -60 -50 0 10 60 70 120 130 180 190 240 250 300 310 360 370 420 430 480 490 540 550 600 610 |
| 50 | -780 -770 -720 -710 -660 -650 -600 - 590 -540 -530 -480 -470 -420 -410 -360 -350 -300 -290 -240 -230 -180 -170 -120 -110 -60 -50 0 10 60 70 120 130 180 190 240 250 300 310 360 370 420 430 480 490 540 550 600 610 660 670 720 730 780 790 |
| 60 | -950 -900 -890 -840 -830 -780 -770 - 720 -710 -660 -650 -600 -590 -540 -530 -480 -470 -420 -410 -360 -350 -300 -290 -240 -230 -180 -170 -120 -110 -60 -50 0 10 60 70 120 130 180 190 240 250 300 310 360 370 420 430 480 490 540 550 600 610 660 670 720 730 780 790 840 850 900 910 960 970 |
| 80 | -1260 -1250 -1200 -1190 -1140 -1130 - 1080 -1070 -1020 -1010 -960 -950 -900 - 890 -840 -830 -780 -770 -720 -710 -660 -650 -600 -590 -540 -530 -480 -470 -420 -410 -360 -350 -300 -290 -240 -230 -180 -170 -120 -110 -60 -50 0 10 60 70 120 130 180 190 240 250 300 310 360 370 420 430 480 490 540 550 600 610 660 670 720 730 780 790 840 850 900 910 960 970 1020 1030 1080 1090 1140 1150 1200 1210 1260 1270 |
| 100 | -1620 -1610 -1560 -1550 -1500 -1490 - 1440 -1430 -1380 -1370 -1320 -1310 -1260 -1250 -1200 -1190 -1140 -1130 -1080 - 1070 -1020 -1010 -960 -950 -900 -890 - 840 -830 -780 -770 -720 -710 -660 -650 -600 -590 -540 -530 -480 -470 -420 -410 -360 -350 -300 -290 -240 -230 -180 -170 -120 -110 -60 -50 0 10 60 70 120 130 180 190 240 250 300 310 360 370 420 430 480 490 540 550 600 610 660 670 720 730 780 790 840 850 900 910 960 970 1020 1030 1080 1090 1140 1150 1200 1210 1260 1270 1320 1330 1380 1390 1440 1450 1500 1510 1560 1570 1620 1630 |

oder wobei die Mitte des LTE-M-Trägers unter Berücksichtigung eines 100-kHz-Schutzbands und eines 30-kHz-NR-Unterträgerabstands im Verhältnis zu einem NR-Raster gemäß einer beliebigen Versatzposition in der folgenden Tabelle positioniert ist:

| NR-Bandbreite (MHz) | Versatzpositionen der Mitte des LTE-M-Trägers in Anzahl von NR-Unterträgern im Verhältnis zu dem NR-Raster |
|---|---|
| 10 | n30 bei geraden ganzen Zahlen n von - 4 bis 4; und<br>-20+n30 bei ungeraden ganzen Zahlen n von -3 bis 5 |
| 15 | n30 bei geraden ganzen Zahlen n von - 6 bis 6; und<br>-20+n30 bei ungeraden ganzen Zahlen n von -5 bis 7 |
| 20 | n30 bei geraden ganzen Zahlen n von - 8 bis 10; und<br>-20+n30 bei ungeraden ganzen Zahlen n von -9 bis 9 |
| 25 | n30 bei geraden ganzen Zahlen n von - 12 bis 12; und<br>-20+n30 bei ungeraden ganzen Zahlen n von -11 bis 13 |

(fortgesetzt)

| NR-Bandbreite (MHz) | Versatzpositionen der Mitte des LTE-M-Trägers in Anzahl von NR-Unterträgern im Verhältnis zu dem NR-Raster |
|---|---|
| 30 | n30 bei geraden ganzen Zahlen n von - 14 bis 14; und -20+n30 bei ungeraden ganzen Zahlen n von -13 bis 15 |
| 40 | n30 bei geraden ganzen Zahlen n von - 20 bis 20; und -20+n30 bei ungeraden ganzen Zahlen n von -19 bis 21 |
| 50 | n30 bei geraden ganzen Zahlen n von - 26 bis 26; und -20+n30 bei ungeraden ganzen Zahlen n von -25 bis 27 |
| 60 | n30 bei geraden ganzen Zahlen n von - 30 bis 31; und -20+n30 bei ungeraden ganzen Zahlen n von -31 bis 33 |
| 80 | n30 bei geraden ganzen Zahlen n von - 42 bis 42; und -20+n30 bei ungeraden ganzen Zahlen n von -41 bis 43 |
| 100 | n30 bei geraden ganzen Zahlen n von - 54 bis 54; und -20+n30 bei ungeraden ganzen Zahlen n von -53 bis 55 |

; oder wobei die Mitte des LTE-M-Trägers unter Berücksichtigung eines 300-kHz-Schutzbands und eines 30-kHz-NR-Unterträgerabstands im Verhältnis zu einem NR-Raster gemäß einer beliebigen Versatzposition in der folgenden Tabelle positioniert ist:

| NR-Bandbreite (MHz) | Versatzpositionen der Mitte des LTE-M-Trägers in Anzahl von NR-Unterträgern im Verhältnis zu dem NR-Raster |
|---|---|
| 10 | -90 -80 -30 -20 30 40 90 100 |
| 15 | -200 -150 -140 -90 -80 -30 -20 30 40 90 100 150 160 210 220 |
| 20 | -270 -260 -210 -200 -150 -140 -90 -80 -30 -20 30 40 90 100 150 160 210 220 270 280 |
| 25 | -330 -320 -270 -260 -210 -200 -150 - 140 -90 -80 -30 -20 30 40 90 100 150 160 210 220 270 280 330 340 |
| 30 | -440 -390 -380 -330 -320 -270 -260 - 210 -200 -150 -140 -90 -80 -30 -20 30 40 90 100 150 160 210 220 270 280 330 340 390 400 450 460 |
| 40 | -570 -560 -510 -500 -450 -440 -390 - 380 -330 -320 -270 -260 -210 -200 -150 -140 -90 -80 -30 -20 30 40 90 100 150 160 210 220 270 280 330 340 390 400 450 460 510 520 570 580 630 |
| 50 | -750 -740 -690 -680 -630 -620 -570 - 560 -510 -500 -450 -440 -390 -380 -330 -320 -270 -260 -210 -200 -150 -140 -90 -80 -30 -20 30 40 90 100 150 160 210 220 270 280 330 340 390 400 450 460 510 520 570 580 630 640 690 700 750 760 |
| 60 | -930 -920 -870 -860 -810 -800 -750 - 740 -690 -680 -630 -620 -570 -560 -510 -500 -450 -440 -390 -380 -330 -320 -270 -260 -210 -200 -150 -140 -90 -80 -30 - 20 30 40 90 100 150 160 210 220 270 280 330 340 390 400 450 460 510 520 570 580 630 640 690 700 750 760 810 820 870 880 930 940 |
| 80 | -1280 -1230 -1220 -1170 -1160 -1110 - 1100 -1050 -1040 -990 -980 -930 -920 - 870 -860 -810 -800 -750 -740 -690 -680 -630 -620 -570 -560 -510 -500 -450 -440 -390 -380 -330 -320 -270 -260 -210 -200 -150 -140 -90 -80 -30 -20 30 40 90 100 150 160 210 220 270 280 330 340 390 400 450 460 510 520 570 580 630 640 690 700 750 760 810 820 870 880 930 940 990 1000 1050 1060 1110 1120 1170 1180 1230 1240 1290 1300 |

(fortgesetzt)

| NR-Bandbreite (MHz) | Versatzpositionen der Mitte des LTE-M-Trägers in Anzahl von NR-Unterträgern im Verhältnis zu dem NR-Raster |
|---|---|
| 100 | -1590 -1580 -1530 -1520 -1470 -1460 - 1410 -1400 -1350 -1340 -1290 -1280 -1230 -1220 -1170 -1160 -1110 -1100 -1050 - 1040 -990 -980 -930 -920 -870 -860 -810 -800 -750 -740 -690 -680 -630 -620 -570 -560 -510 -500 -450 -440 -390 -380 -330 -320 -270 -260 -210 -200 -150 -140 -90 -80 -30 -20 30 40 90 100 150 160 210 220 270 280 330 340 390 400 450 460 510 520 570 580 630 640 690 700 750 760 810 820 870 880 930 940 990 1000 1050 1060 1110 1120 1170 1180 1230 1240 1290 1300 1350 1360 1410 1420 1470 1480 1530 1540 1590 1600 |

; oder wobei die Mitte des LTE-M-Trägers unter Berücksichtigung eines 300-kHz-Schutzbands und eines 30-kHz-NR-Unterträgerabstands im Verhältnis zu einem NR-Raster gemäß einer beliebigen Versatzposition in der folgenden Tabelle positioniert ist:

| NR-Bandbreite (MHz) | Versatzpositionen der Mitte des LTE-M-Trägers in Anzahl von NR-Unterträgern im Verhältnis zu dem NR-Raster |
|---|---|
| 10 | -20+n60 bei ganzen Zahlen n von -1 bis 2; und<br>-30+n60 bei ganzen Zahlen n von -1 bis 2 |
| 15 | -20+n60 bei ganzen Zahlen n von -3 bis 4; und<br>-30+n60 bei ganzen Zahlen n von -2 bis 4 |
| 20 | -20+n60 bei ganzen Zahlen n von -4 bis 5; und<br>-30+n60 bei ganzen Zahlen n von -4 bis 5 |
| 25 | -20+n60 bei ganzen Zahlen n von -5 bis 6; und<br>-30+n60 bei ganzen Zahlen n von -5 bis 6 |
| 30 | -20+n60 bei ganzen Zahlen n von -7 bis 8; und<br>-30+n60 bei ganzen Zahlen n von -6 bis 8 |
| 40 | -20+n60 bei ganzen Zahlen n von -9 bis 10; und<br>-30+n60 bei ganzen Zahlen n von -9 bis 11 |
| 50 | -20+n60 bei ganzen Zahlen n von -12 bis 13; und<br>-30+n60 bei ganzen Zahlen n von -12 bis 13 |
| 60 | -20+n60 bei ganzen Zahlen n von -15 bis 16; und -30+n60 bei ganzen Zahlen n von -15 bis 16 |
| 80 | -20+n60 bei ganzen Zahlen n von -21 bis 22; und<br>-30+n60 bei ganzen Zahlen n von -20 bis 22 |
| 100 | -20+n60 bei ganzen Zahlen n von -26 bis 27; und<br>-30+n60 bei ganzen Zahlen n von -26 bis 27 |

; oder wobei die Mitte des LTE-M-Trägers unter Berücksichtigung von 4 NR-Ressourcenblöcken und eines 30-kHz-NR-Unterträgerabstands im Verhältnis zu einem NR-Raster gemäß einer beliebigen Versatzposition in der folgenden Tabelle positioniert ist:

| NR-Bandbreite (MHz) | Versatzpositionen der Mitte des LTE-M-Trägers in Anzahl von NR-Unterträgern im Verhältnis zu dem NR-Raster |
|---|---|
| 10 | -120 -60 0 60 120 |
| 15 | -180 -120 -60 0 60 120 180 |
| 20 | -270 -210 -150 -90 -30 30 90 150 210 270 |
| 25 | -390 -330 -270 -210 -150 -90 -30 30 90 150 210 270 330 |

(fortgesetzt)

| NR-Bandbreite (MHz) | Versatzpositionen der Mitte des LTE-M-Trägers in Anzahl von NR-Unterträgern im Verhältnis zu dem NR-Raster |
|---|---|
| 30 | -420 -360 -300 -240 -180 -120 -60 0 60 120 180 240 300 360 420 |
| 40 | -600 -540 -480 -420 -360 -300 -240 - 180 -120 -60 0 60 120 180 240 300 360 420 480 540 600 |
| 50 | -750 -690 -630 -570 -510 -450 -390 - 330 -270 -210 -150 -90 -30 30 90 150 210 270 330 390 450 510 570 630 690 750 |
| 60 | -960 -900 -840 -780 -720 -660 -600 - 540 -480 -420 -360 -300 -240 -180 -120 -60 0 60 120 180 240 300 360 420 480 540 600 660 720 780 840 900 960 |
| 80 | -1290 -1230 -1170 -1110 -1050 -990 - 930 -870 -810 -750 -690 -630 -570 -510 -450 -390 -330 -270 -210 -150 -90 -30 30 90 150 210 270 330 390 450 510 570 630 690 750 810 870 930 990 1050 1110 1170 1230 1290 |
| 100 | -1590 -1530 -1470 -1410 -1350 -1290 - 1230 -1170 -1110 -1050 -990 -930 -870 - 810 -750 -690 -630 -570 -510 -450 -390 -330 -270 -210 -150 -90 -30 30 90 150 210 270 330 390 450 510 570 630 690 750 810 870 930 990 1050 1110 1170 1230 1290 1350 1410 1470 1530 1590 |

; oder wobei die Mitte des LTE-M-Trägers unter Berücksichtigung von 4 NR-Ressourcenblöcken und eines 30-kHz-NR-Unterträgerabstands im Verhältnis zu einem NR-Raster gemäß einer beliebigen Versatzposition in der folgenden Tabelle positioniert ist:

| NR-Bandbreite (MHz) | Versatzpositionen der Mitte des LTE-M-Trägers in Anzahl von NR-Unterträgern im Verhältnis zu dem NR-Raster |
|---|---|
| 10 | n60, wobei n eine ganze Zahl von -2 bis 2 ist |
| 15 | n60, wobei n eine ganze Zahl von -3 bis 3 ist |
| 20 | -30+n60, wobei n eine ganze Zahl von -4 bis 5 ist |
| 25 | -30+n60, wobei n eine ganze Zahl von -6 bis 6 ist |
| 30 | n60, wobei n eine ganze Zahl von -7 bis 7 ist |
| 40 | n60, wobei n eine ganze Zahl von -10 bis 10 ist |
| 50 | -30+n60, wobei n eine ganze Zahl von -12 bis 13 ist |
| 60 | n60, wobei n eine ganze Zahl von -16 bis 16 ist |
| 80 | -30+n60, wobei n eine ganze Zahl von -21 bis 22 ist |
| 100 | -30+n60, wobei n eine ganze Zahl von -26 bis 27 ist |

; oder wobei die Mitte des LTE-M-Trägers unter Berücksichtigung von 5 NR-Ressourcenblöcken und eines 30-kHz-NR-Unterträgerabstands im Verhältnis zu einem NR-Raster gemäß einer beliebigen Versatzposition in der folgenden Tabelle positioniert ist:

| NR-Bandbreite (MHz) | Versatzpositionen der Mitte des LTE-M-Trägers in Anzahl von NR-Unterträgern im Verhältnis zu dem NR-Raster |
|---|---|
| 10 | -140 -80 -20 40 100 |
| 15 | -200 -140 -80 -20 40 100 160 220 |
| 20 | -290 -230 -170 -110 -50 10 70 130 190 250 |
| 25 | -350 -290 -230 -170 -110 -50 10 70 130 190 250 310 370 |
| 30 | -440 -380 -320 -260 -200 -140 -80 -20 40 100 160 220 280 340 400 460 |

(fortgesetzt)

| NR-Bandbreite (MHz) | Versatzpositionen der Mitte des LTE-M-Trägers in Anzahl von NR-Unterträgern im Verhältnis zu dem NR-Raster |
|---|---|
| 40 | -620 -560 -500 -440 -380 -320 -260 - 200 -140 -80 -20 40 100 160 220 280 340 400 460 520 580 |
| 50 | -770 -710 -650 -590 -530 -470 -410 - 350 -290 -230 -170 -110 -50 10 70 130 190 250 310 370 430 490 550 610 670 730 790 |
| 60 | -920 -860 -800 -740 -680 -620 -560 - 500 -440 -380 -320 -260 -200 -140 -80 - 20 40 100 160 220 280 340 400 460 520 580 640 700 760 820 880 940 |
| 80 | -1250 -1190 -1130 -1070 -1010 -950 - 890 -830 -770 -710 -650 -590 -530 -470 -410 -350 -290 -230 -170 -110 -50 10 70 130 190 250 310 370 430 490 550 610 670 730 790 850 910 970 1030 1090 1150 1210 1270 |
| 100 | -1610 -1150 -1490 -1430 -1370 -1310 - 1250 -1190 -1130 -1070 -1010 -950 -890 -830 -770 -710 -650 -590 -530 -470 -410 -350 -290 -230 -170 -110 -50 10 70 130 190 250 310 370 430 490 550 610 670 730 790 580 910 970 1030 1090 1150 1210 1270 1330 1390 1450 1510 1570 1630 |

; oder wobei die Mitte des LTE-M-Trägers unter Berücksichtigung von 5 NR-Ressourcenblöcken und eines 30-kHz-NR-Unterträgerabstands im Verhältnis zu einem NR-Raster gemäß einer beliebigen Versatzposition in der folgenden Tabelle positioniert ist:

| NR-Bandbreite (MHz) | Versatzpositionen der Mitte des LTE-M-Trägers in Anzahl von NR-Unterträgern im Verhältnis zu dem NR-Raster |
|---|---|
| 10 | -20+n60, wobei n eine ganze Zahl von -2 bis 2 ist |
| 15 | -20+n60, wobei n eine ganze Zahl von -3 bis 4 ist |
| 20 | -50+n60, wobei n eine ganze Zahl von -4 bis 5 ist |
| 25 | -50+n60, wobei n eine ganze Zahl von -5 bis 7 ist |
| 30 | -20+n60, wobei n eine ganze Zahl von -7 bis 8 ist |
| 40 | -20+n60, wobei n eine ganze Zahl von -10 bis 10 ist |
| 50 | -50+n60, wobei n eine ganze Zahl von -12 bis 14 ist |
| 60 | -20+n60, wobei n eine ganze Zahl von -15 bis 16 ist |
| 80 | -50+n60, wobei n eine ganze Zahl von -20 bis 22 ist |
| 100 | -50+n60, wobei n eine ganze Zahl von -26 bis 28 ist |

**3.** Netzvorrichtung (30, 50) nach Anspruch 1, wobei sich die Mitte des LTE-M-Trägers bei einem NR-Unterträgerindex $k^*$ im Verhältnis zu einem NR-Raster befindet, wobei $k^*$ in einer Menge $k^* = 10q$ liegt, wobei q eine ganze Zahl ist,

wobei $k^*$ in dem folgenden Bereich liegt:

$$\frac{B_L/2 + G - B_{nr}/2 - 15}{N_S} \le k^* \le \frac{B_{nr}/2 - B_L/2 - G - 15}{N_S},$$

wobei $N_S$ ein NR-Unterträgerabstand ist, $B_L$ eine Betriebsbandbreite für LTE-M ist, $B_{nr}$ die NR-Bandbreite ist und $G$ eine Bandbreite der Schutzbänder für den LTE-M-Träger wiedergibt,
wobei die Mitte des LTE-M-Trägers bei $k^*$ gemäß einer der folgenden Gleichungen positioniert ist, wobei $N_{RB}$ die Anzahl von NR-Ressourcenblöcken, RBs, ist:

$$\frac{(12N_S)L + B_L/2 + G - 15}{N_S} \le k^* \le \frac{(12N_S)(L + N_{RB}) - B_L/2 - G - 15}{N_S}$$

bei einer geraden Anzahl von NR-Ressourcenblöcken, wobei $L$ eine ganze Zahl ist und $(-N_{RB}/2 + 1) \le L \le N_{RB}/2$; und

$$\frac{(12N_S)L + B_L/2 + G - 15 - (12N_S/2)}{N_S} \le k^*$$

$$\le \frac{(12N_S)(L + N_{RB}) - B_L/2 - G - 15 - (12N_S/2)}{N_S}$$

bei einer ungeraden Anzahl von NR-Ressourcenblöcken, wobei $L$ eine ganze Zahl ist und $-(N_{RB} - 1)/2 \le L \le (N_{RB} - 1)/2$.

4. Netzvorrichtung (30, 50) nach Anspruch 3, wobei die minimale Anzahl $N$ von NR-Ressourcenblöcken, die für den LTE-M-Träger benötigt wird, wie folgt lautet:

$$N = \left\lceil \frac{B_L + 2G}{(12N_S)} \right\rceil$$

wobei $\lceil . \rceil$ eine Aufrundungsfunktion ist.

5. Netzvorrichtung (30, 50) nach Anspruch 3,

wobei eine minimale Frequenz $F_{nr,min}$ = -15 + (12$N_S$)$L$ und eine maximale Frequenz $F_{nr,max}$ = -15 + (12$N_S$)($L$ + $N_{RB}$) bei einer geraden Anzahl von NR-Ressourcenblöcken und eine minimale Frequenz $F_{nr,min}$ = -15 - (12$N_S$/2)$L$ und eine maximale Frequenz $F_{nr,max}$ = -15 - (12$N_S$/2)($L$ + $N_{RB}$) bei einer ungeraden Anzahl von NR-Ressourcenblöcken und
wobei die maximale Schutzbandbandbreite auf einer linken (niedrigere Frequenz) und auf einer rechten (höhere Frequenz) Seite des LTE-M-Trägers $G_{right}$ = $F_{nr,max}$ - ($F_{LTEM}$ + $B_L$/2) und $G_{left}$ = ($F_{LTEM}$ - $B_L$/2) - $F_{nr,min}$ sind, wobei $F_{LTEM}$ die Mitte des LTE-M-Trägers ist.

6. Netzvorrichtung (30, 50) nach Anspruch 5, wobei $L$ wie folgt lautet:

$$L = \left\lfloor \frac{(F_{LTEM} - B_L/2) + 15}{(12N_S)} \right\rfloor$$

wobei $\lfloor . \rfloor$ die Abrundungsfunktion ist und
wobei die Mitte des LTE-M-Trägers $F_{LTEM}$ an einer Position im Bereich von k* liegt, wenn $L$ die $G_{left}$ und die $G_{right}$ maximiert.

7. Netzvorrichtung (30, 50) nach Anspruch 1, wobei eine Ausrichtung von NR- und LTE-M-Unterträgern gemäß der folgenden Gleichung erfolgt: 100$n$ = 100$m$ + 30$k$, wobei 100$m$ kHz die möglichen Frequenzen eines NR-Rasters wiedergibt, ein 30-kHz-NR-Unterträgerabstand angenommen wird und 100$n$ kHz wiedergibt, wo die Mitte des LTE-M-Trägers platzierbar ist, wobei $m$ und $n$ ganze Zahlen sind und $k$ ein NR-Unterträgerindex ist.

8. Netzvorrichtung (30, 50) nach Anspruch 1, wobei sich ein NR-Raster bei einem Unterträger #0 in einem Ressourcenblock mit einem Index $N_{RB}$/2 bei einer ungeraden Anzahl von Ressourcenblöcken befindet, wobei sich das NR-Raster bei einem Unterträger #6 in einem Ressourcenblock mit einem Index ($N_{RB}$ - 1)/2 bei einer ungeraden Anzahl von Ressourcenblöcken befindet, wobei $N_{RB}$ die Anzahl von Ressourcenblöcken ist und wobei der Unterträger #0 dem frequenzmäßig niedrigsten Unterträger entspricht und der Unterträgerindex #11 dem frequenzmäßig höchsten Unterträger in einem Ressourcenblock entspricht.

9. Netzvorrichtung (30, 50) nach Anspruch 1, wobei die Netzvorrichtung eine drahtlose Vorrichtung (50) oder ein Funknetzknoten (30) ist.

10. Netzvorrichtung (30, 50) nach Anspruch 1, wobei die Verarbeitungsschaltung (32, 52) dazu ausgelegt ist, ein Signal zu erzeugen und das erzeugte Signal auf dem LTE-M-Träger innerhalb der Bandbreite des NR-Trägers zu übertragen.

11. Netzvorrichtung (30, 50) nach Anspruch 1, wobei die Verarbeitungsschaltung (32, 52) dazu ausgelegt ist, ein Signal auf dem LTE-M-Träger innerhalb der Bandbreite des NR-Trägers zu empfangen und das empfangene Signal zu verarbeiten.

12. Netzvorrichtung (30, 50) nach Anspruch 11, wobei die Verarbeitungsschaltung (32, 52) dazu ausgelegt ist, nach dem LTE-M-Träger innerhalb der Bandbreite des NR-Trägers gemäß einem NR-Raster zu suchen.

13. Verfahren (1300) zum Kommunizieren in einem drahtlosen Kommunikationsnetz, umfassend:

Übertragen oder Empfangen (1304), über die Sendeempfängerschaltung, unter Verwendung eines Trägers zur maschinellen Kommunikation über Long Term Evolution, LTE-M, innerhalb der Bandbreite eines New-Radio-Trägers, NR-Trägers, mit Schutzbändern, die sich unmittelbar benachbart zu jedem Ende des LTE-M-Trägers befinden und die vollständig in die NR-Bandbreite passen,
wobei die Mitte des LTE-M-Trägers an einem NR-Unterträger auf einem 100-kHz-NR-Rastergitter ausgerichtet ist und wobei eine maximale Anzahl von Unterträgern in dem LTE-M-Träger an Unterträgern in NR ausgerichtet ist,
wobei sich die Mitte des LTE-M-Trägers innerhalb der NR-Bandbreite derart befindet, dass mindestens eines von Folgendem gilt:

bei einer vorbestimmten Bandbreite für jedes der Schutzbänder ist eine minimale Anzahl von NR-Ressourcenblöcken durch einen beliebigen Teil des LTE-M-Trägers und die Schutzbänder an jedem Ende belegt; und

bei einer vorbestimmten Anzahl von NR-Ressourcenblöcken, die durch einen beliebigen Teil des LTE-M-Trägers und die Schutzbänder an jedem Ende belegt sein können, wird eine minimale Schutzbandbandbreite von jedem Ende des LTE-M-Trägers zu dem jeweiligen unmittelbar benachbarten NR-Ressourcenblock, der nicht durch einen beliebigen Teil des LTE-M-Trägers und die Schutzbänder belegt ist, maximiert.

14. Verfahren (1300) nach Anspruch 13, wobei das Verfahren ferner Erzeugen (1302) eines Signals umfasst und das Übertragen oder Empfangen Übertragen des erzeugten Signals auf dem LTE-M-Träger innerhalb der Bandbreite des NR-Trägers umfasst.

15. Verfahren (1300) nach Anspruch 13, wobei das Übertragen oder Empfangen Empfangen eines Signals auf dem LTE-M-Träger innerhalb der Bandbreite des NR-Trägers umfasst und wobei das Verfahren ferner Verarbeiten (1306) des empfangenen Signals umfasst.

**Revendications**

1. Dispositif de réseau (30, 50), comprenant :

un circuit émetteur-récepteur (36, 56) ; et
un circuit de traitement (32, 52) associé de manière fonctionnelle au circuit émetteur-récepteur et configuré pour :

émettre ou recevoir, par l'intermédiaire du circuit émetteur-récepteur, à l'aide d'une porteuse de communication de type machine à évolution à long terme, LTE-M, au sein de la bande passante d'une porteuse de nouvelle radio, NR, avec des bandes de garde qui sont immédiatement adjacentes à chaque extrémité de la porteuse de LTE-M et qui s'inscrivent entièrement dans la bande passante de NR,
dans lequel le centre de la porteuse de LTE-M est aligné avec une sous-porteuse de NR sur une grille de trame de NR de 100 kHz, et dans lequel un nombre maximal de sous-porteuses dans la porteuse de LTE-M s'aligne avec des sous-porteuses dans la NR, dans lequel le centre de la porteuse de LTE-M est situé au sein de la bande passante de NR de sorte qu'au moins l'un des éléments suivants :

un nombre minimum de blocs de ressources de NR sont occupés par une quelconque partie de la porteuse de LTE-M et les bandes de garde à chaque extrémité, étant donné une bande passante prédéterminée pour chacune des bandes de garde ; et

étant donné un nombre prédéterminé de blocs de ressources de NR qui peuvent être occupés par une quelconque partie de la porteuse de LTE-M et les bandes de garde à chaque extrémité, une bande passante de bande de garde minimale de chaque extrémité de la porteuse de LTE-M au bloc de ressource de NR immédiatement adjacent respectif non occupé par une partie de la porteuse de LTE-M et les bandes de garde sont maximisées.

2. Dispositif de réseau selon la revendication 1 (30, 50), dans lequel le centre de la porteuse de LTE-M est positionné par rapport à une trame de NR, en considérant une bande de garde de 100 kHz et un espacement de sous-porteuses de NR de 30 kHz, selon une quelconque position de décalage dans le tableau suivant :

| Bande passante de NR (MHz) | Positions de décalage du centre de la porteuse de LTE-M, en nombre de sous-porteuses de NR par rapport à la trame de NR |
|---|---|
| 10 | -120 -110 -60 -50 0 10 60 70 120 130 |
| 15 | -180 -170 -120 -110 -60 -50 0 10 60 70 120 130 180 190 |
| 20 | -290 -240 -230 -180 -170 -120 -110 - 60 -50 0 10 60 70 120 130 180 190 240 250 300 |
| 25 | -360 -350 -300 -290 -240 -230 -180 - 170 -120 -110 -60 -50 0 10 60 70 120 130 180 190 240 250 300 310 360 370 |
| 30 | -420 -410 -360 -350 -300 -290 -240 - 230 -180 -170 -120 -110 -60 -50 0 10 60 70 120 130 180 190 240 250 300 310 360 370 420 430 |
| 40 | -600 -590 -540 -530 -480 -470 -420 - 410 -360 -350 -300 -290 -240 -230 -180 -170 -120 -110 -60 -50 0 10 60 70 120 130 180 190 240 250 300 310 360 370 420 430 480 490 540 550 600 610 |
| 50 | -780 -770 -720 -710 -660 -650 -600 - 590 -540 -530 -480 -470 -420 -410 -360 -350 -300 -290 -240 -230 -180 -170 - 120 -110 -60 -50 0 10 60 70 120 130 180 190 240 250 300 310 360 370 420 430 480 490 540 550 600 610 660 670 720 730 780 790 |
| 60 | -950 -900 -890 -840 -830 -780 -770 - 720 -710 -660 -650 -600 -590 -540 -530 -480 -470 -420 -410 -360 -350 -300 - 290 -240 -230 -180 -170 -120 -110 -60 -50 0 10 60 70 120 130 180 190 240 250 300 310 360 370 420 430 480 490 540 550 600 610 660 670 720 730 780 790 840 850 900 910 960 970 |
| 80 | -1260 -1250 -1200 -1190 -1140 -1130 -1080 -1070 -1020 -1010 -960 -950 -900 -890 -840 -830 -780 -770 -720 -710 - 660 -650 -600 -590 -540 -530 -480 -470 -420 -410 -360 -350 -300 -290 -240 - 230 -180 -170 -120 -110 -60 -50 0 10 60 70 120 130 180 190 240 250 300 310 360 370 420 430 480 490 540 550 600 610 660 670 720 730 780 790 840 850 900 910 960 970 1020 1030 1080 1090 1140 1150 1200 1210 1260 1270 |
| 100 | -1620 -1610 -1560 -1550 -1500 -1490 -1440 -1430 -1380 -1370 -1320 -1310 - 1260 -1250 1200 -1190 -1140 -1130 - 1080 -1070 -1020 -1010 -960 -950 -900 -890 -840 -830 -780 -770 -720 -710 - 660 -650 -600 -590 -540 -530 -480 -470 -420 -410 -360 -350 -300 -290 -240 - 230 -180 -170 -120 -110 -60 -50 0 10 60 70 120 130 180 190 240 250 300 310 360 370 420 430 480 490 540 550 600 610 660 670 720 730 780 790 840 850 900 910 960 970 1020 1030 1080 1090 1140 1150 1200 1210 1260 1270 1320 1330 1380 1390 1440 1450 1500 1510 1560 1570 1620 1630 |

ou dans lequel le centre de la porteuse de LTE-M est positionné par rapport à une trame de NR, en considérant une bande de garde de 100 kHz et un espacement de sous-porteuses de NR de 30 kHz, selon une quelconque position de décalage dans le tableau suivant :

| Bande passante de NR (MHz) | Positions de décalage du centre de la porteuse de LTE-M, en nombre de sous-porteuses de NR par rapport à la trame de NR |
|---|---|
| 10 | n30 pour les entiers pairs n de -4 à 4 ; et<br>-20+n30 pour les entiers impairs n de -3 à 5 |
| 15 | n30 pour les entiers pairs n de -6 à 6 ; et<br>-20+n30 pour les entiers impairs n de -5 à 7 |
| 20 | n30 pour les entiers pairs n de -8 à 10 ; et<br>-20+n30 pour les entiers impairs n de -9 à 9 |
| 25 | n30 pour les entiers pairs n de -12 à 12 ; et<br>-20+n30 pour les entiers impairs n de -11 à 13 |
| 30 | n30 pour les entiers pairs n de -14 à 14 ; et<br>-20+n30 pour les entiers impairs n de -13 à 15 |
| 40 | n30 pour les entiers pairs n de -20 à 20 ; et<br>-20+n30 pour les entiers impairs n de -19 à 21 |
| 50 | n30 pour les entiers pairs n de -26 à 26 ; et<br>-20+n30 pour les entiers impairs n de -25 à 27 |
| 60 | n30 pour les entiers pairs n de -30 à 31 ; et<br>-20+n30 pour les entiers impairs n de -31 à 33 |
| 80 | n30 pour les entiers pairs n de -42 à 42 ; et<br>-20+n30 pour les entiers impairs n de -41 à 43 |
| 100 | n30 pour les entiers pairs n de -54 à 54 ; et<br>-20+n30 pour les entiers impairs n de -53 à 55 |

ou dans lequel le centre de la porteuse de LTE-M est positionné par rapport à une trame de NR, en considérant une bande de garde de 300 kHz et un espacement de sous-porteuses de NR de 30 kHz, selon une quelconque position de décalage dans le tableau suivant :

| Bande passante de NR (MHz) | Positions de décalage du centre de la porteuse de LTE-M, en nombre de sous-porteuses de NR par rapport à la trame de NR |
|---|---|
| 10 | -90 -80 -30 -20 30 40 90 100 |
| 15 | -200 -150 -140 -90 -80 -30 -20 30 40 90 100 150 160 210 220 |
| 20 | -270 -260 -210 -200 -150 -140 -90 - 80 -30 -20 30 40 90 100 150 160 210 220 270 280 |
| 25 | -330 -320 -270 -260 -210 -200 -150 - 140 -90 -80 -30 -20 30 40 90 100 150 160 210 220 270 280 330 340 |
| 30 | -440 -390 -380 -330 -320 -270 -260 - 210 -200 -150 -140 -90 -80 -30 -20 30 40 90 100 150 160 210 220 270 280 330 340 390 400 450 460 |
| 40 | -570 -560 -510 -500 -450 -440 -390 - 380 -330 -320 -270 -260 -210 -200 -150 -140 -90 -80 -30 -20 30 40 90 100 150 160 210 220 270 280 330 340 390 400 450 460 510 520 570 580 630 |
| 50 | -750 -740 -690 -680 -630 -620 -570 - 560 -510 -500 -450 -440 -390 -380 -330 -320 -270 -260 -210 -200 -150 -140 -90 -80 -30 -20 30 40 90 100 150 160 210 220 270 280 330 340 390 400 450 460 510 520 570 580 630 640 690 700 750 760 |
| 60 | -930 -920 -870 -860 -810 -800 -750 - 740 -690 -680 -630 -620 -570 -560 -510 -500 -450 -440 -390 -380 -330 -320 - 270 -260 -210 -200 -150 -140 -90 -80 - 30 -20 30 40 90 100 150 160 210 220 270 280 330 340 390 400 450 460 510 520 570 580 630 640 690 700 750 760 810 820 870 880 930 940 |

(suite)

| Bande passante de NR (MHz) | Positions de décalage du centre de la porteuse de LTE-M, en nombre de sous-porteuses de NR par rapport à la trame de NR |
|---|---|
| 80 | -1280 -1230 -1220 -1170 -1160 -1110 -1100 -1050 -1040 -990 -980 -930 -920 -870 -860 -810 -800 -750 -740 -690 - 680 -630 -620 -570 -560 -510 -500 -450 -440 -390 -380 -330 -320 -270 -260 - 210 -200 -150 -140 -90 -80 -30 -20 30 40 90 100 150 160 210 220 270 280 330 340 390 400 450 460 510 520 570 580 630 640 690 700 750 760 810 820 870 880 930 940 990 1000 1050 1060 1110 1120 1170 1180 1230 1240 1290 1300 |
| 100 | -1590 -1580 -1530 -1520 -1470 -1460 -1410 -1400 -1350 -1340 -1290 -1280 - 1230 -1220 -1170 -1160 -1110 -1100 - 1050 -1040 -990 -980 -930 -920 -870 - 860 -810 -800 -750 -740 -690 -680 -630 -620 -570 -560 -510 -500 -450 -440 - 390 -380 -330 -320 -270 -260 -210 -200 -150 -140 -90 -80 -30 -20 30 40 90 100 150 160 210 220 270 280 330 340 390 400 450 460 510 520 570 580 630 640 690 700 750 760 810 820 870 880 930 940 990 1000 1050 1060 1110 1120 1170 1180 1230 1240 1290 1300 1350 1360 1410 1420 1470 1480 1530 1540 1590 1600 |

ou dans lequel le centre de la porteuse de LTE-M est positionné par rapport à une trame de NR, en considérant une bande de garde de 300 kHz et un espacement de sous-porteuses de NR de 30 kHz, selon une quelconque position de décalage dans le tableau suivant :

| Bande passante de NR (MHz) | Positions de décalage du centre de la porteuse de LTE-M, en nombre de sous-porteuses de NR par rapport à la trame de NR |
|---|---|
| 10 | -20+n60 pour les entiers n de -1 à 2 ; et<br>-30+n60 pour les entiers n de -1 à 2 |
| 15 | -20+n60 pour les entiers n de -3 à 4 ; et<br>-30+n60 pour les entiers n de -2 à 4 |
| 20 | -20+n60 pour les entiers n de -4 à 5 ; et<br>-30+n60 pour les entiers n de -4 à 5 |
| 25 | -20+n60 pour les entiers n de -5 à 6 ; et<br>-30+n60 pour les entiers n de -5 à 6 |
| 30 | -20+n60 pour les entiers n de -7 à 8 ; et<br>-30+n60 pour les entiers n de -6 à 8 |
| 40 | -20+n60 pour les entiers n de -9 à 10 ; et<br>-30+n60 pour les entiers n de -9 à 11 |
| 50 | -20+n60 pour les entiers n de -12 à 13 ; et<br>-30+n60 pour les entiers n de -12 à 13 |
| 60 | -20+n60 pour les entiers n de -15 à 16 ; et<br>-30+n60 pour les entiers n de -15 à 16 |
| 80 | -20+n60 pour les entiers n de -21 à 22 ; et<br>-30+n60 pour les entiers n de -20 à 22 |
| 100 | -20+n60 pour les entiers n de -26 à 27 ; et |
| 100 | -30+n60 pour les entiers n de -26 à 27 |

ou dans lequel le centre de la porteuse de LTE-M est positionné par rapport à une trame de NR, en considérant 4 blocs de ressources de NR et un espacement de sous-porteuses de NR de 30 kHz, selon une quelconque position de décalage dans le tableau suivant :

| Bande passante de NR (MHz) | Positions de décalage du centre de la porteuse de LTE-M, en nombre de sous-porteuses de NR par rapport à la trame de NR |
|---|---|
| 10 | -120 -60 0 60 120 |
| 15 | -180 -120 -60 0 60 120 180 |
| 20 | -270 -210 -150 -90 -30 30 90 150 210 270 |
| 25 | -390 -330 -270 -210 -150 -90 -30 30 90 150 210 270 330 |
| 30 | -420 -360 -300 -240 -180 -120 -60 0 60 120 180 240 300 360 420 |
| 40 | -600 -540 -480 -420 -360 -300 -240 - 180 -120 -60 0 60 120 180 240 300 360 420 480 540 600 |
| 50 | -750 -690 -630 -570 -510 -450 -390 - 330 -270 -210 -150 -90 -30 30 90 150 210 270 330 390 450 510 570 630 690 750 |
| 60 | -960 -900 -840 -780 -720 -660 -600 - 540 -480 -420 -360 -300 -240 -180 -120 -60 0 60 120 180 240 300 360 420 480 540 600 660 720 780 840 900 960 |
| 80 | -1290 -1230 -1170 -1110 -1050 -990 - 930 -870 -810 -750 -690 -630 -570 -510 -450 -390 -330 -270 -210 -150 -90 -30 30 90 150 210 270 330 390 450 510 570 630 690 750 810 870 930 990 1050 1110 1170 1230 1290 |
| 100 | -1590 -1530 -1470 -1410 -1350 -1290 -1230 -1170 -1110 -1050 -990 -930 -870 -810 -750 -690 -630 -570 -510 -450 - 390 -330 -270 -210 -150 -90 -30 30 90 150 210 270 330 390 450 510 570 630 690 750 810 870 930 990 1050 1110 1170 1230 1290 1350 1410 1470 1530 1590 |

; ou dans lequel le centre de la porteuse de LTE-M est positionné par rapport à une trame de NR, en considérant 4 blocs de ressources de NR et un espacement de sous-porteuses de NR de 30 kHz, selon une quelconque position de décalage dans le tableau suivant :

| Bande passante de NR (MHz) | Positions de décalage du centre de la porteuse de LTE-M, en nombre de sous-porteuses de NR par rapport à la trame de NR |
|---|---|
| 10 | n60 où n est un entier de -2 à 2 |
| 15 | n60 où n est un entier de -3 à 3 |
| 20 | -30+n60 où n est un entier de -4 à 5 |
| 25 | -30+n60 où n est un entier de -6 à 6 |
| 30 | n60 où n est un entier de -7 à 7 |
| 40 | n60 où n est un entier de -10 à 10 |
| 50 | -30+n60 où n est un entier de -12 à 13 |
| 60 | n60 où n est un entier de -16 à 16 |
| 80 | -30+n60 où n est un entier de -21 à 22 |
| 100 | -30+n60 où n est un entier de -26 à 27 |

; ou dans lequel le centre de la porteuse de LTE-M est positionné par rapport à une trame de NR, en considérant 5 blocs de ressources de NR et un espacement de sous-porteuses de NR de 30 kHz, selon une quelconque position de décalage dans le tableau suivant :

| Bande passante de NR (MHz) | Positions de décalage du centre de la porteuse de LTE-M, en nombre de sous-porteuses de NR par rapport à la trame de NR |
|---|---|
| 10 | -140 -80 -20 40 100 |

(suite)

| Bande passante de NR (MHz) | Positions de décalage du centre de la porteuse de LTE-M, en nombre de sous-porteuses de NR par rapport à la trame de NR |
|---|---|
| 15 | -200 -140 -80 -20 40 100 160 220 |
| 20 | -290 -230 -170 -110 -50 10 70 130 190 250 |
| 25 | -350 -290 -230 -170 -110 -50 10 70 130 190 250 310 370 |
| 30 | -440 -380 -320 -260 -200 -140 -80 - 20 40 100 160 220 280 340 400 460 |
| 40 | -620 -560 -500 -440 -380 -320 -260 - 200 -140 -80 -20 40 100 160 220 280 340 400 460 520 580 |
| 50 | -770 -710 -650 -590 -530 -470 -410 - 350 -290 -230 -170 -110 -50 10 70 130 190 250 310 370 430 490 550 610 670 730 790 |
| 60 | -920 -860 -800 -740 -680 -620 -560 - 500 -440 -380 -320 -260 -200 -140 -80 -20 40 100 160 220 280 340 400 460 520 580 640 700 760 820 880 940 |
| 80 | -1250 -1190 -1130 -1070 -1010 -950 - 890 -830 -770 -710 -650 -590 -530 -470 -410 -350 -290 -230 -170 -110 -50 10 70 130 190 250 310 370 430 490 550 610 670 730 790 850 910 970 1030 1090 1150 1210 1270 |
| 100 | -1610 -1550 -1490 -1430 -1370 -1310 -1250 -1190 -1130 -1070 -1010 -950 - 890 -830 -770 -710 -650 -590 -530 -470 -410 -350 -290 -230 -170 -110 -50 10 70 130 190 250 310 370 430 490 550 610 670 730 790 850 910 970 1030 1090 1150 1210 1270 1330 1390 1450 1510 1570 1630 |

ou dans lequel le centre de la porteuse de LTE-M est positionné par rapport à une trame de NR, en considérant 5 blocs de ressources de NR et un espacement de sous-porteuses de NR de 30 kHz, selon une quelconque position de décalage dans le tableau suivant :

| Bande passante de NR (MHz) | Positions de décalage du centre de la porteuse de LTE-M, en nombre de sous-porteuse de NR par rapport à la trame de NR |
|---|---|
| 10 | -20+n60 où n est un entier de -2 à 2 |
| 15 | -20+n60 où n est un entier de -3 à 4 |
| 20 | -50+n60 où n est un entier de -4 à 5 |
| 25 | -50+n60 où n est un entier de -5 à 7 |
| 30 | -20+n60 où n est un entier de -7 à 8 |
| 40 | -20+n60 où n est un entier de -10 à 10 |
| 50 | -50+n60 où n est un entier de -12 à 14 |
| 60 | -20+n60 où n est un entier de -15 à 16 |
| 80 | -50+n60 où n est un entier de -20 à 22 |
| 100 | -50+n60 où n est un entier de -26 à 28 |

3. Dispositif de réseau (30, 50) selon la revendication 1, dans lequel le centre de la porteuse de LTE-M est situé au niveau d'un indice de sous-porteuse de NR $k*$ par rapport à une trame de NR, où $k*$ est dans compris un ensemble $k*=10q$, où q est un entier,
dans lequel $k*$ est compris dans la plage :

$$\frac{B_L/2+G-B_{nr}/2-15}{N_S} \leq k^* \leq \frac{B_{nr}/2-B_L/2-G-15}{N_S},$$

où $N_S$ est l'espacement de sous-porteuses de NR, $B_L$ est la bande passante fonctionnelle pour la LTE-M, $B_{nr}$ est la bande passante de NR et $G$ représente la bande passante des bandes de garde pour la porteuse de LTE-M, dans lequel le centre de la porteuse de LTE-M est positionné au niveau de $k*$ selon l'une des équations suivantes, où $N_{RB}$ est le nombre de blocs de ressources, RB, de NR :

$$\frac{(12N_S)L + B_L/2 + G - 15}{N_S} \leq k^* \leq \frac{(12N_S)(L + N_{RB}) - B_L/2 - G - 15}{N_S}$$

pour un nombre pair de blocs de ressources de NR, où $L$ est un entier et $(-N_{RB}/2 + 1) \leq L \leq N_{RB}/2$ ; et

$$\frac{(12N_S)L + B_L/2 + G - 15 - (12N_S/2)}{N_S} \leq k^*$$
$$\leq \frac{(12N_S)(L + N_{RB}) - B_L/2 - G - 15 - (12N_S/2)}{N_S}$$

pour un nombre impair de blocs de ressources de NR, où $L$ est un entier et $-(N_{RB} - 1)/2 \leq L \leq (N_{RB} - 1)/2$.

4.  Dispositif de réseau (30, 50) selon la revendication 3, dans lequel le nombre minimum $N$ de blocs de ressources de NR nécessaires pour la porteuse de LTE-M est :

$$N = \left\lceil \frac{B_L + 2G}{(12N_S)} \right\rceil$$

où $\lceil \cdot \rceil$ est une fonction de partie entière supérieure.

5.  Dispositif de réseau (30, 50) selon la revendication 3, dans lequel une fréquence minimale $F_{nr,min}$ = -15 + (12$N_S$)$L$ et une fréquence maximale $F_{nr,max}$ = -15 + (12$N_S$) (L + $N_{RB}$) pour un nombre pair de blocs de ressources de NR, une fréquence minimale $F_{nr,min}$ = -15 - (12$N_S$/2) + (12$N_S$)$L$ et une fréquence maximale $F_{nr,max}$ = -15 - (12$N_S$/2) + (12$N_S$) (L + $N_{RB}$) pour un nombre impair de blocs de ressources de NR, et dans lequel la bande passante maximale de la bande de garde des côtés gauche (fréquence inférieure) et droite (fréquence supérieure) de la porteuse de LTE-M est $G_{right}$ = $F_{nr,max}$ - ($F_{LTEM}$ + $B_L/2$) et $G_{left}$ = ($F_{LTEM}$ - $B_L/2$) - $F_{nr,min}$, où $F_{LTEM}$ est le centre de la porteuse de LTE-M.

6.  Dispositif de réseau (30, 50) selon la revendication 5, dans lequel L est :

$$L = \left\lfloor \frac{(F_{LTEM} - B_L/2) + 15}{(12N_S)} \right\rfloor$$

où $\lfloor \cdot \rfloor$ est la fonction de partie entière inférieure, et dans lequel le centre $F_{LTEM}$ de la porteuse de LTE-M est dans une position dans la plage de k* où $L$ maximise le $G_{left}$ et le $G_{right}$.

7.  Dispositif de réseau (30, 50) selon la revendication 1, dans lequel l'alignement de sous-porteuses de NR et de LTE-M se produit selon l'équation : 100$n$ = 100$m$ + 30$k$, où 100$m$ kHz représente les fréquences possibles d'une trame de NR, en considérant un espacement de sous-porteuses de NR de 30 kHz, et 100$m$ kHz représente l'endroit où le centre de la porteuse de LTE-M peut être placé, où $m$ et $n$ sont des nombres entiers et $k$ est un indice de sous-porteuse de NR.

8.  Dispositif de réseau (30, 50) selon la revendication 1, dans lequel une trame de NR est située au niveau de la sous-porteuse #0 dans un bloc de ressources avec un indice $N_{RB}/2$ pour un nombre pair de blocs de ressources, dans lequel la trame de NR est située au niveau de la sous-porteuse #6 dans un bloc de ressources avec un indice ($N_{RB}$-1)/2 pour un nombre impair de blocs de ressources, dans lequel $N_{RB}$ est le nombre de blocs de ressources, et dans lequel la sous-porteuse #0 correspond à la sous-porteuse la plus basse en fréquence dans un bloc de ressources et l'indice de sous-porteuse #11 correspond à la sous-porteuse la plus élevée en fréquence dans un bloc de ressources.

**9.** Dispositif de réseau (30, 50) selon la revendication 1, dans lequel le dispositif de réseau est un dispositif sans fil (50) ou un nœud de réseau radio (30).

**10.** Dispositif de réseau (30, 50) selon la revendication 1, dans lequel le circuit de traitement (32, 52) est configuré pour générer un signal et émettre le signal généré sur la porteuse de LTE-M au sein de la bande passante de la porteuse de NR.

**11.** Dispositif de réseau (30, 50) selon la revendication 1, dans lequel le circuit de traitement (32, 52) est configuré pour recevoir un signal sur la porteuse de LTE-M au sein de la bande passante de la porteuse de NR et traiter le signal reçu.

**12.** Dispositif de réseau (30, 50) selon la revendication 11, dans lequel le circuit de traitement (32, 52) est configuré pour rechercher la porteuse de LTE-M au sein de la bande passante de la porteuse de NR selon une trame de NR.

**13.** Procédé (1300) de communication dans un réseau de communication sans fil, comprenant :

l'émission ou la réception (1304), par l'intermédiaire du circuit émetteur-récepteur, à l'aide d'une porteuse de communication de type machine à évolution à long terme, LTE-M, au sein de la bande passante d'une porteuse de nouvelle radio, NR, avec des bandes de garde qui sont immédiatement adjacentes à chaque extrémité de la porteuse de LTE-M et qui s'inscrivent entièrement dans la bande passante de NR,
dans lequel le centre de la porteuse de LTE-M est aligné avec une sous-porteuse de NR sur une grille de trame de NR de 100 kHz, et dans lequel un nombre maximal de sous-porteuses dans la porteuse de LTE-M s'aligne avec des sous-porteuses dans la NR,
dans lequel le centre de la porteuse de LTE-M est situé au sein de la bande passante de NR de sorte qu'au moins l'un parmi :

un nombre minimum de blocs de ressources NR est occupé par une partie quelconque de la porteuse de LTE-M et les bandes de garde à chaque extrémité, étant donné une largeur de bande prédéterminée pour chacune des bandes de garde ; et
étant donné un nombre prédéterminé de blocs de ressources de NR qui peuvent être occupés par une quelconque partie de la porteuse de LTE-M et les bandes de garde à chaque extrémité, une bande passante de bande de garde minimale de chaque extrémité de la porteuse de LTE-M au bloc de ressources de NR immédiatement adjacent respectif non occupé par une partie de la porteuse de LTE-M et les bandes de garde au niveau de chaque extrémité sont maximisées.

**14.** Procédé (1300) selon la revendication 13, dans lequel le procédé comprend en outre la génération (1302) d'un signal et l'émission ou la réception comprend l'émission du signal généré sur la porteuse de LTE-M dans la bande passante de la porteuse de NR.

**15.** Procédé (1300) selon la revendication 13, dans lequel l'émission ou la réception comprend la réception d'un signal sur la porteuse de LTE-M dans la bande passante de la porteuse de NR et dans lequel le procédé comprend en outre le traitement (1306) du signal reçu.

One frame: 10 ms

Subcarrier: 30 kHz

One subframe: 1 ms includes two slots
(i.e., 2 x 14 = 28 OFDM symbols)

*FIG. 1*

FIG. 2

30 kHz

NR subcarriers:

15 kHz

LTE-M subcarriers:

**FIG. 3**

LTE-M resource block (12 subcarriers)   LTE-M resource block (12 subcarriers)

DC subcarrier (i.e., center of
LTE-M carrier)

*FIG. 4*

NR subcarriers:

**15 kHz**

NR subcarrier
index k*

LTE-M subcarriers:

LTE-M carrier
center or DC
subcarrier
(Case 1)

LTE-M carrier
center or DC
subcarrier
(Case 2)

*FIG. 5*

EP 3 921 968 B1

Minimum frequency
reserved for embedding
LTE-M

Minimum frequency
reserved for embedding
LTE-M

$B_L$

$G$

Guard
band
($G$ kHz)

LTE-M carrier
center ($F_{LTEM}$)

$G$

Guard
band
($G$ kHz)

**FIG. 6**

*FIG. 7*

RB edge                   RB edge                   RB edge

NR RB (360 kHz)                 NR RB (360 kHz)

15 kHz

NR raster

**FIG. 8**

*FIG. 9*

**FIG. 10**

EP 3 921 968 B1

FIG. 11

$F_{nr,min}$                                    q NR resource blocks (q = 4, in this figure)                                    $F_{nr,max}$

| NR resource block # $L$ | | | NR resource block # $(L + q\text{-}1)$ |

$G_{left}$          $B_L/2$ = 547.5 kHz          LTE-M carrier          $B_L/2$ = 547.5 kHz          $G_{right}$
                                                 center ($F_{LTEM}$)

LTE-M carrier ($B_L$ = 1095 kHz)

*FIG. 12*

1300

GENERATE A SIGNAL ON AN LTE-M CARRER WITHIN THE
BANDWIDTH OF THE NR CARRIER
1302

TRANSMIT THE GENERATED SIGNAL OR RECEIVE A SIGNAL USING
AN LTE-M CARRIER WITHIN THE BANDWIDTH OF AN NR CARRIER
WITH GUARD BANDS THAT ARE IMMEDIATELY ADJACENT TO EACH
END OF THE LTE-M CARRIER AND THAT FIT ENTIRELY WITHIN THE
NR BANDWIDTH, WHERE THE CENTER OF THE LTE-M CARRIER IS
ALIGNED WITH AN NR SUBCARRIER ON A 100 KHZ NR RASTER
GRID, AND WHERE A MAXIMUM NUMBER OF SUBCARRIERS IN THE
LTE-M CARRIER ALIGN WITH SUBCARRIERS IN NR, WHERE THE
CENTER OF THE LTE-M CARRIER IS LOCATED WITHIN THE NR
BANDWIDTH SO AS TO SATISFY CERTAIN CONDITION(S).

PROCESS THE RECEIVED SIGNAL
1306

## FIG. 13

EP 3 921 968 B1

NETWORK
NODE
30

COMMUNICATION
INTERFACE
CIRCUITRY
38

ANTENNA(S) 34

TRANSCEIVER CIRCUITRY 36

PROCESSING CIRCUITRY 32

PROCESSOR(S)
42

MEMORY
44

COMPUTER
PROGRAM(S)
46,
CONFIG DATA
48

FIG. 14

59

WIRELESS
DEVICE
50

ANTENNA(S) 54

TRANSCEIVER CIRCUITRY 56

PROCESSING CIRCUITRY 52

PROCESSOR(S)
62

MEMORY
64

COMPUTER
PROGRAM(S)
66,
CONFIG DATA
68

**FIG. 15**

**FIG. 16**

*1700*

**1710** Host computer

**1711**
SW

**1712**
Host application

**1715**
HW

**1716**
Communication interface

**1718**
Processing circuitry

*1760*

**1720** Base station

**1721**
SW

**1725**
HW

**1726**
Communication interface

**1727**
Radio interface

**1728**
Processing circuitry

*1750*

**1730** UE

**1731**
SW

**1732**
Client application

**1735**
HW

**1737**
Radio interface

**1738**
Processing circuitry

*1770*

**FIG. 17**

BEGIN

1810
Host computer
provides user data

1811
Host computer
executes host
application

1820
Host computer
initiates
transmission
carrying the user
data to the UE

1830
Base station
transmits the user
data

1840
UE executes client
application

END

FIG. 18

BEGIN

1910
Host computer
provides user data

1911
Host computer
executes host
application

1920
Host computer
initiates
transmission
carrying the user
data to the UE

1930
Base station
transmits the user
data

1940
UE executes client
application

END

FIG. 19

**FIG. 20**

**FIG. 21**

30

ANTENNA(S) 34

TRANSCEIVER CIRCUITRY 36

32, 44, 46

COMMUNICATING MODULE
2202

**FIG. 22**

50

ANTENNA(S) 54

TRANSCEIVER CIRCUITRY 56

52, 64, 66

COMMUNICATING MODULE
2302

**FIG. 23**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62800983

**Non-patent literature cited in the description**

- **ERICSSON 3GPP.** Coexistence of LTE-MTC with NR. *Tdoc R1-1812122, Spokane, USA,* November 2018
- **ERICSSON 3GPP.** Feature lead summary for Coexistence of LTE-MTC with NR. *Tdoc R1-1813723, Spokane, USA,* November 2018

- **QUALCOMM INCORPORATED 3GPP.** Coexistence of LTE-MTC with NR. *R1-1813041, Spokane, USA,* November 2018